# EUROPEAN PATENT APPLICATION

(11) **EP 2 218 959 A1**
(43) Date of publication of application: **18.08.2010**
(21) Application number: 08848474.6
(22) Date of filing: 30.10.2008
(51) Int. Cl.: F21S 2/00, F21S 6/00, F21V 21/26, F21Y 101/02

(54) **ILLUMINATING DEVICE AND IMAGE DISPLAY DEVICE**

(30) Priority: 07.11.2007 JP 2007289833; 01.04.2008 JP 2008095409; 17.04.2008 JP 2008108109
(71) Applicant: Sharp Kabushiki Kaisha, Osaka-shi Osaka 545-8522 (JP)
(72) Inventor: TAKAHASHI, Fujio, Osaka 545-8522 (JP); KANEKO, Takashi, Osaka 545-8522 (JP); WAKABAYASHI, Yasutaka, Osaka 545-8522 (JP); MATSUMI, Takamoto, Osaka 545-8522 (JP)
(74) Representative: Treeby, Philip David William
(86) International application number: PCT/JP2008/069750
(87) International publication number: WO 2009/060778

(57) **Abstract**

A conventional illumination device cannot sufficiently illuminate the periphery of a screen of an image display device, and an effect of indirect illumination (realistic sensation or alleviation of glare) cannot be sufficiently obtained. Particularly, illuminance in a lateral direction of the screen is insufficient. The present invention provides an illumination device for illuminating a periphery of equipment such as an image display device, including: a plurality of illumination parts on which a light source is mounted; and a support part for supporting the plurality of illumination parts, so that a different area of the periphery of the equipment is irradiated with light from the plurality of illumination parts.

## Description

### TECHNICAL FIELD

The present invention relates to an illumination device for illuminating, for example, a periphery of equipment of an image display device, and an image display device provided with such an illumination device.

### BACKGROUND ART

In recent years, owing to high performance of an image display device such as a liquid crystal display device and EL (Electroluminescence) display device, and development of a broadcast distribution technique due to progress of a digital broadcast technique, an environment in which a high quality picture can be viewed has been prepared.
Further, as one of methods of viewing a picture such as a movie with high realistic sensation, there is a method of viewing the picture, in lower brightness (illuminance) of the illumination of a room in which the image display device is installed. When the picture is viewed in the low illuminance of the illumination of such a room, it is known that the picture can be viewed with high realistic sensation by illuminating the periphery of a screen of the image display device, and therefore an illumination device for illuminating the periphery of the screen of the image display device has been developed (for example, refer to Patent Document 1).

However, when the picture is viewed in the low illumination of the room, there is a problem that the picture in the screen is turned into glare in a dark room for a user (viewer), and viewing for a long time is a burden to an eye of the user. There is a possibility that a health of the user is devastated, such as causing abnormal brain wave to occur, for particularly a photosensitive user. Accordingly, the illumination device for illuminating the periphery of the screen has effects of not only increasing the high realistic sensation but also gradually reducing a difference of luminance between the screen and the periphery of the screen, thereby alleviating glare, and reducing the burden of the eye of the user.

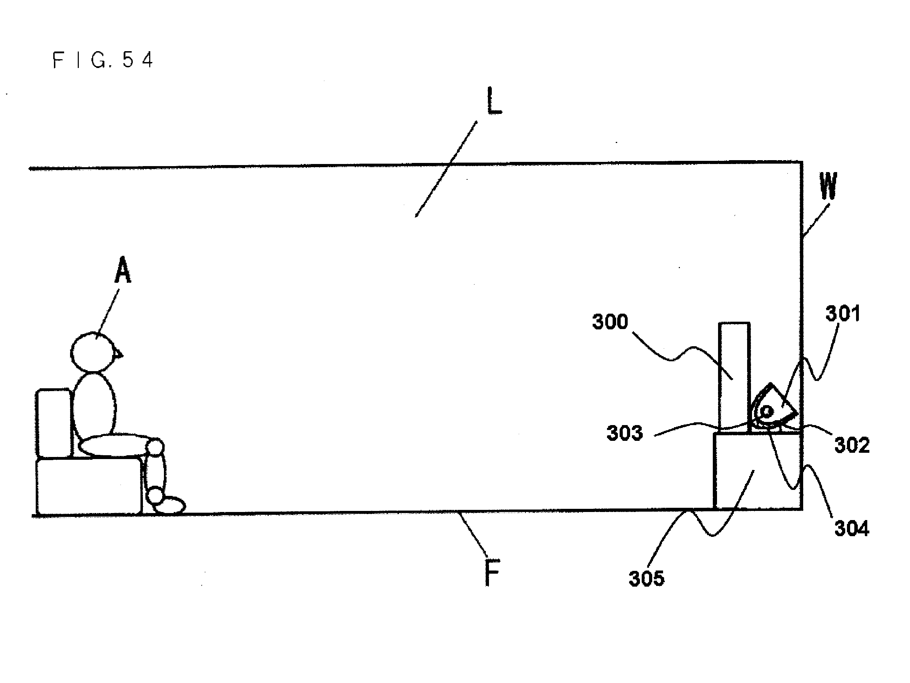

Patent Document 1 as described below discloses an illumination device 301 placed at the backside of an image display device 300 installed in a living room space L, for illuminating a back wall W of the image display device 300, as shown in FIG. 54. The illumination device 301 is placed in a low-board 305 with a seat 304 interposed therebetween. The seat 304 is attached to a reflection plate 302, with a light source 303 housed in the reflection plate 302 having a substantially U-shape in a cross-section. The illumination device 301 is adjusted such that the back wall W at the backside of the image display device 300 is illuminated obliquely upward from below.
[Patent Document 1] Japanese Patent Application Laid-Open No. 2006-19095

### DISCLOSURE OF THE INVENTION

### [Problems to be Solved by the Invention]

However, the illumination device 301 disclosed in Patent Document 1 illuminates the back wall W only in one direction obliquely upward from below. Therefore, there is a problem that the periphery of the screen of the image display device 300 cannot be sufficiently illuminated, and an effect of indirect illumination (high realistic sensation and/or alleviation of glare) cannot be sufficiently obtained. Particularly, there is a problem that illuminance in a lateral direction of the screen is insufficient.
Further, in recent years, a larger screen of the image display device has been progressed, and therefore when the illumination device is applied to the display device of the large screen, quantity of light emitted to a wall surface in an upper part of the screen is insufficient only by illuminating the back wall from below, thus making it impossible to sufficiently obtain the effect of the indirect illumination.

Therefore, the present invention is made in view of the above-described problems and the present invention relates to the illumination device for illuminating the periphery of equipment such as an image display device, and an object of the present invention is to secure sufficient illuminance in the periphery of the equipment.

Further, when the periphery of the image display device is illuminated, the present invention makes it possible to secure sufficient illuminance in the periphery of the screen and give higher realistic sensation to a user.

### [Means for Solving the Problems]

The present invention provides an illumination device for illuminating a periphery of equipment such as an image display device, including: a plurality of illumination parts on which a light source is mounted; and a support part for supporting the plurality of illumination parts, so that a different area of the periphery of the equipment is irradiated with light of the plurality of illumination parts.
With this structure, sufficient illuminance can be secured in the periphery of the equipment. Further, when the periphery of the image display device is illuminated, sufficient illuminance can be secured in the periphery of a screen and higher realistic sensation can be given to a user.

The present invention provides an illumination device for illuminating the periphery of equipment such as an image display device, including: a plurality of illumination parts on which a light source is mounted; and a support part for supporting the plurality of illumination parts, so that the periphery of the equipment is irradiated with light of the plurality of illumination parts from different directions respectively.
With this structure, sufficient illuminance can be secured in the periphery of the equipment. Further, when the periphery of the image display device is illuminated, sufficient illuminance can be secured in the periphery of the screen, and higher realistic sensation can be given to the user.

Further, the present invention provides the illumination device, wherein the illumination parts are connected to the support part via a turning member, so as to be turned with respect to the support part.
With this structure, the user can suitably adjust a range of illumination, according to a size of the image display device or a surrounding environment of the illumination device.

Further, the present invention provides the illumination device, wherein the turning member includes a locking mechanism for locking the illumination parts at a desired angle with respect to the support part.
With this structure, the user can continuously illuminate an illumination range adjusted by the user.

Further, the present invention provides the illumination device, wherein a triangular shape is formed by the plurality of illumination parts and the support part.
With this structure, a different area of a wall surface at the backside of the equipment such as an image display device is irradiated with light from different directions. Therefore, the wall surface can be efficiently and sufficiently illuminated.

Further, the present invention provides the illumination device, wherein the support part has leg portions on which the illumination device is installed.
With this structure, the illumination device can be stably held.

Further, the present invention provides the illumination device, wherein the leg portions can be detached from the support part.
With this structure, by removing the leg portions when an illumination device body is directly attached to the equipment such as an image display device, the illumination device is housed within the equipment such as an image display device, and can be out of sight of the user.

Further, the present invention provides the illumination device, wherein the support part has an attachment part for attachment to the equipment.
With this structure, the illumination device body can be directly attached to the equipment such as an image display device.

The present invention provides an image display device, including: any one of the aforementioned illumination devices; and an image display device used together with the illumination device.
With this structure, sufficient illuminance can be secured in the periphery of the screen of the image display device, and higher realistic sensation can be given to the user.

### [Effects of the Invention]

According to the present invention, an illumination device is provided for illuminating the periphery of equipment, to thereby secure sufficient illuminance in the periphery of the equipment.

Further, when the present invention is used as the illumination device for illuminating the periphery of an image display device, sufficient illuminace can be secured in the periphery of a screen, and higher realistic sensation can be given to a user.

### BRIEF DESCRIPTION OF THE DRAWINGS

FIG. 1 is a schematic front view of an illumination device according to first embodiment of the present invention.
FIG. 2 is a schematic perspective view of the illumination device according to the first embodiment of the present invention.
FIG. 3 (a) is a schematic perspective view of an illumination part of the illumination device according to the first embodiment of the present invention. FIG. 3(b) is an enlarged perspective view of the illumination part of the illumination device according to the first embodiment of the present invention. FIG. 3(c) is a schematic sectional view of the illumination part of the illumination device according to the first embodiment of the present invention.
FIG. 4 is a control block diagram of the illumination device including a power supply circuit control part according to first embodiment of the present invention.
FIG. 5 is a control flow diagram of the illumination device according to the first embodiment of the present invention.
FIG. 6 (a) is a view showing a state in which the illumination device according to the first embodiment of the present invention is installed between the image display device and a wall surface at the backside of the image display device. FIG. 6(b) is a view showing a luminance distribution when the periphery of the image display device is illuminated by the illumination device according to the first embodiment of the present invention.
FIG. 7 is a plan view of an aspect of attaching an illumination body part according to the first embodiment of the present invention, to the image display device, viewed from a rear surface of the image display device.
FIG. 8 is a perspective view of the image display device according to the aspect of attaching the illumination body part of the first embodiment of the present invention, to the image display device.
FIG. 9 is a view of the aspect of attaching the illumination body part according to the first embodiment of the present invention, to the image display device, viewed from a horizontal direction of the image display device.
FIG. 10 is a schematic front view of the illumination body part of the illumination device according to a second embodiment of the present invention.
FIG. 11 is a schematic perspective view of the illumination body part of the illumination device according to the second embodiment of the present invention.
FIG. 12 (a) is a schematic perspective view of illumination parts according to the second embodiment of the present invention. FIG. 12(b) is an enlarged schematic perspective view of the illumination parts according to the second embodiment of the present invention. FIG. 12(c) is a schematic sectional view of the illumination parts according to the second embodiment of the present invention.
FIG. 13 is a schematic front view of an illumination body part of an illumination device according to a third embodiment of the present invention.
FIG. 14 is a schematic perspective view of the illumination body part of the illumination device according to the third embodiment of the present invention.
FIG. 15 is a schematic enlarged view of a turning mechanism of the illumination device according to the third embodiment of the present invention.
FIG. 16 is a schematic perspective view of state in which each illumination part of the illumination device according to the third embodiment of the present invention is folded with respect to a support part.
FIG. 17 is a schematic front view of an illumination device according to a fourth embodiment 4 of the present invention.
FIG. 18 is a schematic front view of an illumination device according to a fifth embodiment of the present invention.
FIG. 19 is a schematic front view of an illumination device according to a sixth embodiment of the present invention.
FIG. 20 is an outer appearance perspective view of an illumination device according to a seventh embodiment.
FIG. 21 is an outer appearance front view of the illumination device according to the seventh embodiment.
FIG. 22 is an explanatory view showing an example of a structure of a light source part.
FIG. 23 is an explanatory view showing an installation example of the illumination device according to the seventh embodiment.
FIG. 24 is an explanatory view showing an example of the structure of a light receiving part.
FIG. 25 is an explanatory view showing an arrangement example of the light receiving part.
FIG. 26 is an explanatory view showing an example of an installing position of the light receiving part.
FIG. 27 an explanatory view showing an example of other configuration example of the light receiving part.
FIG. 28 is a block diagram showing the structure of the illumination device according to the seventh embodiment.
FIG. 29 is an explanation showing a display example of a warning.
FIG. 30 is a flowchart showing a processing procedure of the illumination device according to the seventh embodiment.
FIG. 31 is an explanatory view showing an example of indirect illumination by the illumination device according to the seventh embodiment.
FIG. 32 is a block diagram showing a structure of an illumination device according to an eighth embodiment.
FIG. 33 is an outer appearance view of a remote controller.
FIG. 34 is an explanatory view showing a determination example of a range of an acquired image.
FIG. 35 is an explanatory view showing a processing procedure of the illumination device according to the eighth embodiment.
FIG. 36 is an explanatory view showing the processing procedure of the illumination device according to the eighth embodiment.
FIG. 37 is an explanatory view showing an example of a coordinate system of a periphery of the image display device.
FIG. 38 is a schematic view showing an example of an experiment environment for measuring an illumination environment of the periphery of the image display device.
FIG. 39 is an explanatory view showing an example of the illumination environment.
FIG. 40 is an explanatory view showing a luminance distribution of a wall surface at a backside of the image display device.
FIG. 41 is an explanatory view showing the luminance distribution of the wall surface at the backside of the image display device.
FIG. 42 is an explanatory view showing the luminance distribution of the wall surface at the backside of the image display device.
FIG. 43 is an explanatory view showing the luminance distribution of the wall surface at the backside of the image display device.
FIG. 44 is an explanatory view showing a calculation result of a characteristic amount.
FIG. 45 is an outer appearance perspective view of an illumination unit configuring an illumination device according to a ninth embodiment.
FIG. 46 is a front view showing an example of an attachment structure of the illumination unit.
FIG. 47 is a perspective view showing an example of the attachment structure of the illumination unit.
FIG. 48 is a side view showing an example of the attachment structure of the illumination unit.
FIG. 49 is a block diagram showing an example of the structure of the illumination unit.
FIG. 50 is a plan view showing an example of an adjustment member for adjusting an attachment interval of the illumination units.
FIG. 51 is a schematic view showing an arrangement example of a light source of the illumination unit.
FIG. 52 is a side view showing other example of the attachment structure of the illumination unit.
FIG. 53 is a front view showing a structure of a device side wall-hooking member including the illumination unit.
FIG. 54 shows a conventional illumination device.

### [Description of Reference Numerals]

- 1, 41, 61, 71, 81, 91: Illumination device
- 2, 43, 63, 72, 82, 92: First illumination part
- 3, 44, 64, 73, 83, 93: Second illumination part
- 84, 94: Third illumination part
- 95: Fourth illumination part
- 20, 65: Illumination part
- 4: Support part
- 5, 45, 66: First turning part
- 6, 46, 67: Second turning part
- 85, 96: Third turning part
- 97: Fourth turning part
- 68: Turning part
- 12: First leg portion
- 13: Second leg portion

### BEST MODE FOR CARRYING OUT THE INVENTION

Embodiments of the illumination device according to the present invention will be described below with reference to the drawings.
Note that as an embodiment of the illumination device of the present invention, the illumination device for illuminating the periphery of an image display device, being a liquid crystal display device, is shown for explanation.

### (First Embodiment)

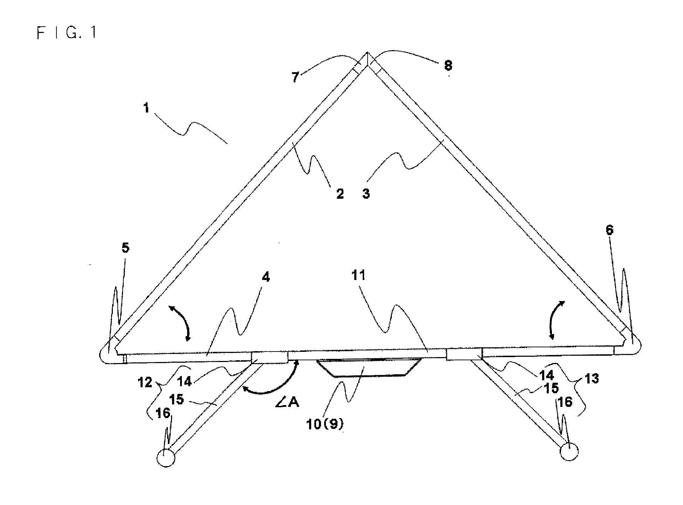

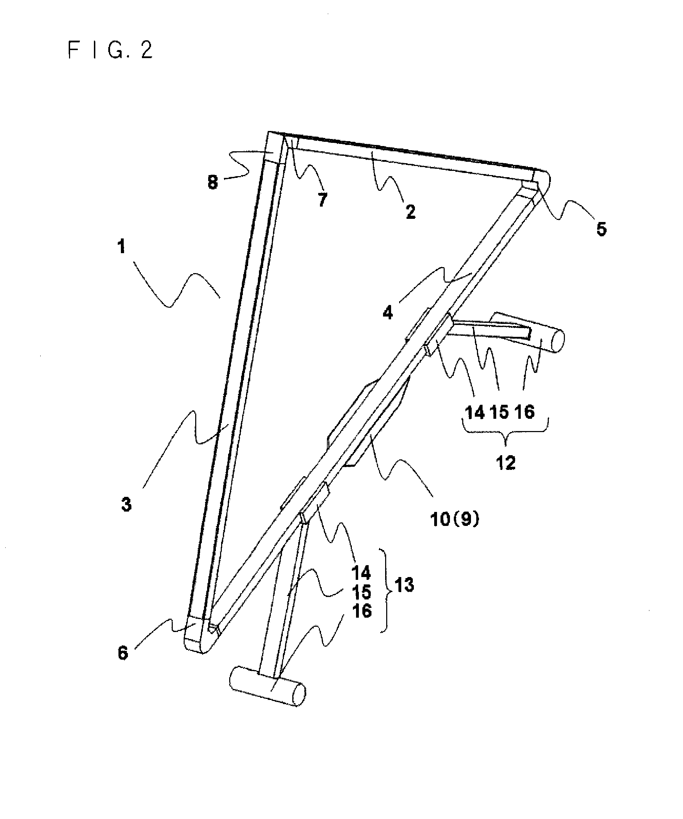

FIG. 1 is a schematic front view of an illumination device 1 according to a first embodiment of the present invention. FIG. 2 is a schematic perspective view of the illumination device 1 according to the first embodiment of the present invention.
The illumination device 1 has a first illumination part 2 and a second illumination part 3 having a light emitting diode (described as an LED hereinafter) as a light source; and a support part 4 for supporting the first illumination part 2 and the second illumination part 3, being a plurality of illumination parts. The support part 4 is formed into a quadrangular prism made of aluminum, and the first illumination part 2 and the second illumination part 3 are formed into a shape with a part of the quadrangular prism of aluminum removed for disposing the LED. Structures of the first illumination part 2 and the second illumination part 3 will be described in detail later.

A first turning part 5 and a second turning part 6 are provided to both ends of the support part 4, for turning the first illumination part 2 and the second illumination part 3, respectively, so that the first illumination part 2 and the second illumination part 3 can be freely turned in a direction with respect to the support part 4 (direction shown by arrow in FIG. 1), with the turning part as a center. Further, the first turning part 5 and/or the second turning part 6 preferably have a friction of a predetermined magnitude (magnitude determined depending on material and length of the illumination part), with respect to the first illumination part 2 and/or the second illumination part 3, so that a user can arbitrarily set an angle formed by the first illumination part 2 and/or the second illumination part 3, and the support part 4, to stably hold the first illumination part 2 and/or the second illumination part 3. Alternatively, the first turning part 5 and/or the second turning part 6 may have a holding mechanism (not shown) separately for stably fixing the first illumination part 2 and/or the second illumination part 3 at an arbitrary angle.

Further, as shown in FIG. 1, a first lock part 7 and a second lock part 8 are respectively provided to end portions opposite to the side connected to the turning parts of the first illumination part 2 and the second illumination part 3, so that the first illumination part 2, the second illumination part 3, and the support part 4 can be fixed in a state of forming a triangular shape. The first lock part 7 and the second lock part 8 have a pair of engaging structures (not shown) having a concave portion and a convex portion on the opposed surfaces, and through engagement of the concave portion and the convex portion, the first illumination part 2 , the second illumination part 3, and the support part 4 are fixed in the state of forming the triangular shape. A locking structure is not limited to the engagement structure having the concave portion and the convex potion, and may be a structure of a lock by a magnetic body.

Further, a power supply control circuit part 9 is provided in the vicinity of the center of the support part 4, for converting alternating-current (AC) voltage from a commercial power supply to direct-current (DC) voltage and supplying the converted voltage to the LED, being a light source provided to the first illumination part 2 and the second illumination part 3, and performing control of luminance and the like of the LED. The power supply control circuit part 9 is housed in a power supply control circuit box 10, so as to be protected from a shock and dust from outside.
As described above, an illumination body part 11 of the illumination device 1 is configured by the aforementioned components.

Next, a description will be given of two leg portions (first leg portion 12 and second leg portion 13) attached to symmetrical positions, with longitudinal center of the support part 4 as a center, for installing the illumination device 1 to a floor and the like. The first leg portion 12 and the second leg portion 13 are formed of a holding part 14 having a U-shape turned sideways in cross-section, with the quadrangular prism-shaped support body fitted thereto; a quadrangular prism-shaped leg body part 15 attached to the holding part 14 in such a manner as extending in a floor direction at a predetermined angle (∠ A) with respect to the support part 4; and a stabilization part 16 provided to an end portion of the leg body part 15, having a suitable weight for stably supporting the illumination device 1. Further, a cover part (not shown) may also be provided, for further covering the holding part 14 with the support part 4 fitted thereto. By the cover part, the support part 4 and the leg portions 12, 13 can be firmly held, and engagement of the support part 4 and the holding part 14 is out of sight from outside, which is preferable in terms of outer appearance.

Note that the angle (∠ A) with respect to the support part 4 is set to approximately 120 degrees for stably holding the illumination body part 11. However, a mechanism of arbitrarily set the angle by a user may be provided. This is because the illumination device 1 can be applied to the image display device of various sizes or other equipment. Further, regarding a suitable weight of the stabilization part 16 for stably holding the illumination body part 11, the weight is different depending on the size and weight of the illumination body part 11, and therefore the weight of the stabilization part 16 is preferably adjusted suitably. Particularly, as is defined by JIS standard and the like for safety, the illumination device preferably has such a weight that it will not fall down, even in a case of being installed on a face at a certain angle (for example, 15 degrees) with respect to a horizontal surface.

Next, a description will be given of the first illumination part 2 and the second illumination part 3, and the LED, being the light source provided to the plurality of illumination parts. Note that the first illumination part 2 and the second illumination part 3 have same structures, and therefore the first illumination part and the second illumination part are described as an illumination part 20 and explained as representatives of the illumination parts.

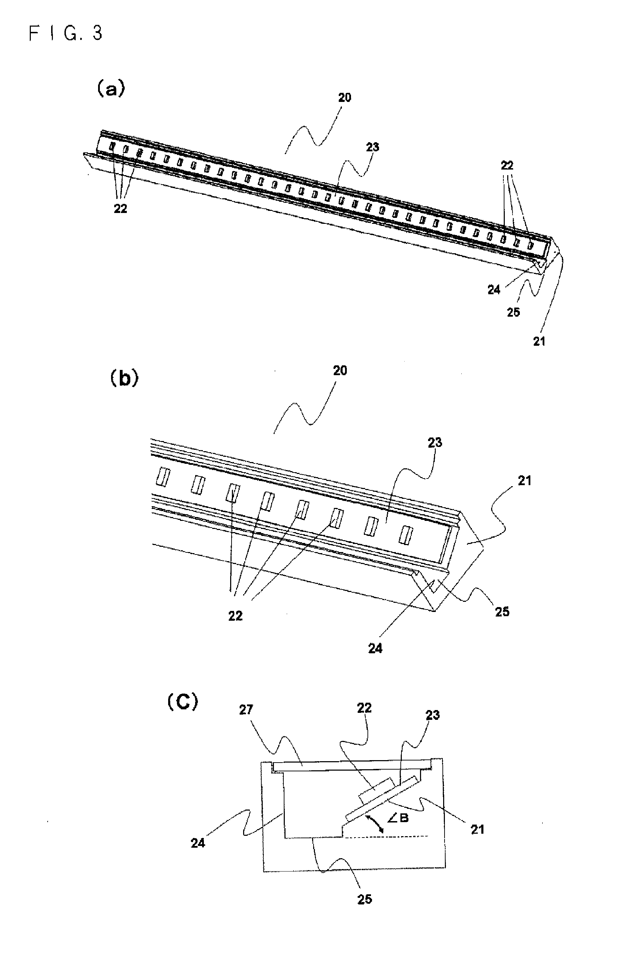

FIG. 3 shows the illumination part 20 of the illumination device 1 according to first embodiment, wherein FIG. 3(a) is a schematic perspective view of the illumination part 20, FIG. 3(b) is an enlarged schematic perspective view of the illumination part 20, and FIG. 3(c) is a schematic sectional view of the illumination part 20.

The illumination part 20 is made of aluminum and has a shape, with a part of which is removed, so that an inclined surface 21 is formed by the inside of the quadrangular prism. For example, a lightweight metal having excellent heat radiation such as aluminum is suitable for efficiently radiating heat from LED 22. Further, an LED substrate 23 is provided to the inclined surface 21, on which a plurality of LEDs 22 are mounted in a row.

The LED substrate 23 is, for example, a glass epoxy substrate, including a plurality of LEDs 22, a connector (not shown) for connecting the LED substrate 23 and the power supply control circuit part 9 or other LED substrate, a limit resistance (not shown) for flowing a constant amount of current through the LEDs 22, and a wiring pattern of a copper foil (not shown). Further, a place not provided with electronic components such as LED on the surface of the LED substrate 23 is preferably painted in white color. This is because the light from the LEDs 22 can be reflected without being absorbed into the LED substrate 23.

Further, as shown in FIG. 3, it is not only a case that one LED substrate 23 is provided to one illumination part 20, but there is also a case that two LED substrates are provided side by side, with approximately half of the longitudinal length of the illumination part 20 set as a longer side. By using a plurality of LED substrates, when a failure occurs to some of the LED substrates, only the substrates having a defect LED may be exchanged, and therefore a cost required for exchanging the LED can be reduced.

Further, the number of LEDs can be reduced, by further shortening two LED substrates and disposing the LED substrates, with a specified space provided between the LED substrates, thus making it possible to reduce the cost of the illumination device. In the illumination device 1 with the illumination body part 11 formed into a triangular shape, an irradiation area corresponding to the space between the LED substrates corresponding to the vicinity of the center of the illumination part 20, is a corner part of the end of an upper side of the screen of the image display device. Therefore, even if there is no LED 22 in the vicinity of the center of the illumination part 20, the illuminance of the area corresponding to the upper side and right and left of the screen is not influenced thereby so much, and the illuminance for giving the effect of indirect illumination to the user can be sufficiently secured.

Further, it is preferable that the inclined surface 21 has an angle (∠ B) of about 30 degrees with respect to a bottom 24 of inside of the illumination part 20. If ∠ B is small, (close to 0 degree), an area in a direction parallel to the wall surface (direction vertical to the bottom 24 of the illumination part 20) is illuminated, and therefore the illuminance of the illuminated wall surface is reduced. Meanwhile, if the angle is larger (close to 90 degrees), only the wall surface at immediately backside of the illumination part 20 is illuminated, thus reducing the illuminance in the periphery of the screen. Accordingly, in order to efficiently irradiate the wall surface at the backside of the image display device with the light from the LEDs 22, a suitable angle is needed. In addition, the height of the side face 25 of the illumination part 20 is preferably designed to be the height so as not to block the light from the LEDs 22 by the side face 25.

Further, as shown in FIG. 3(c), an opening part 26 of the illumination part 20 is covered with a transparent cover part 27 to thereby protect the LED substrate 23, wiring (wiring among a plurality of LED substrates 23 or wiring between the LED substrate 23 and the power supply control circuit part 9), and the like. Acrylic resin, polycarbonate resin, plastic, or the like, is used in the cover part 27, and the cover part 27 may have dispersability. Even if a strong directional light source as an LED is used, the periphery of the screen can be softly illuminated.

Next, the LED 22 used as the light source will be described in detail.
The LED 22 is a surface mount package LED in which LED elements of three colors are packaged, such as red color (R) LED element, blue color (B) LED element, green color (G) LED element. Intensity of each LED element of RGB can be controlled, and by adjusting the intensity (luminance) of the LED element of each color, irradiation of multiple colors is achieved by LED. Therefore, the periphery of the image display device can be irradiated by a favorite color of the user.
Particularly, by illuminating the periphery of the image display device by controlling chromaticity of the LED 22 so as to have similar color to the color of the picture displayed in the image display device (particularly the picture in an area of a screen outer peripheral part), the picture having an expansion of not less than the size of the screen can be provided to the user, and further higher realistic sensation can be given to the user.

Further, the light source is not limited to the LED 22, and other light source such as a fluorescent lamp and a cold-cathode tube may be used. However, the LED has a high directivity of light, and therefore the wall surface of the periphery of the image display device can be efficiently irradiated with light, thus facilitating the control of an irradiating direction of the light. In addition, in a case of using the light source with no high directivity like a fluorescent lamp and emitting light in all directions, a reflection member is preferably provided for reflecting the light emitted to inside of the illumination part 20.

Next, a detailed description will be given of the structure regarding control of the illumination device 1 including the power supply circuit control part 9 and of the control of the illumination device 1.

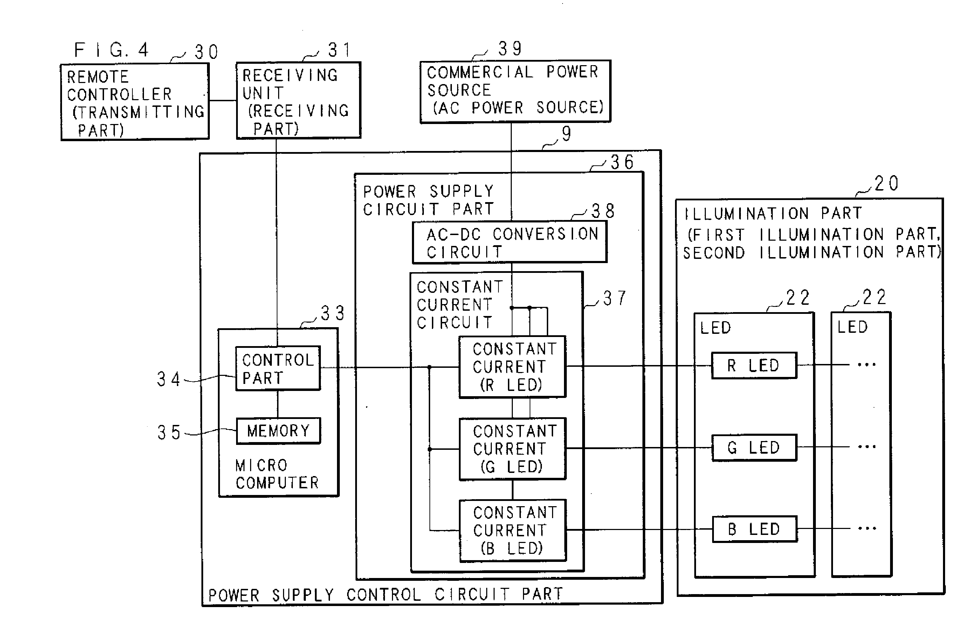

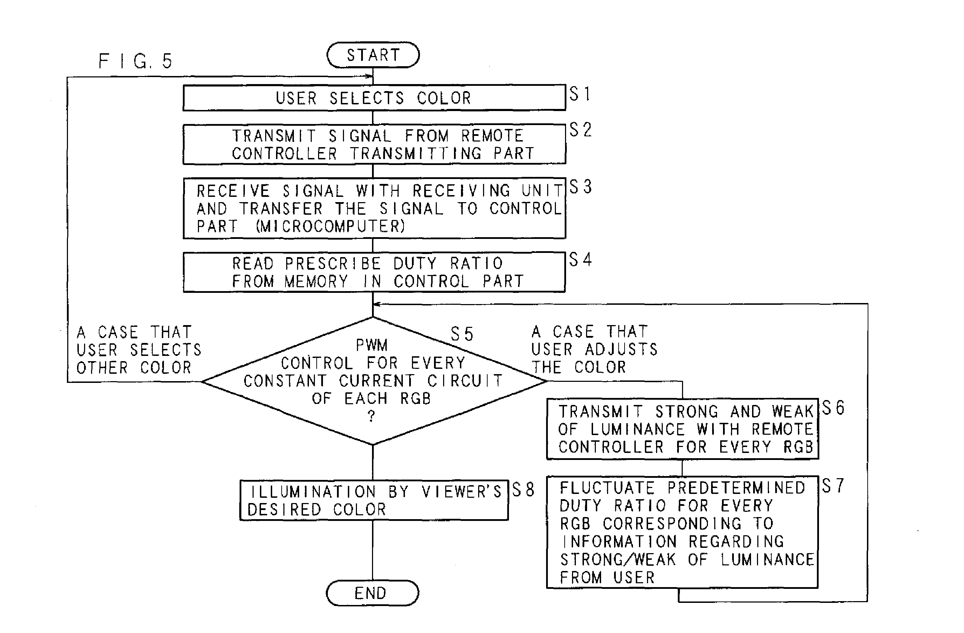

FIG. 4 is a control block diagram of the illumination device 1 including the power supply circuit control part 9 according to the first embodiment of the present invention. FIG. 5 is a control flow diagram of the illumination device 1 according to the first embodiment of the present invention.
In the first embodiment, the user selects color desired to be used for illuminating the periphery of the image display device by remote controller 30, while viewing the picture of the image display device, to thereby decide chromaticity and luminance of the LED 22 of the illumination part 20, and illuminate the periphery of the image display device. The user can select previously set color (preset color), and also can adjust the intensity of each LED element of RGB configuring the LED 22 and prepare the favorite color.

First, the structure regarding the control of the illumination device 1 including the power supply circuit control part 9 will be described. The power supply control circuit 9 is configured by a power supply circuit part 36 and a microcomputer 33 (control device). Further, the power supply circuit 36 has an AC-DC converter circuit (rectifier circuit) 38 for converting the AC voltage supplied from an AC power source 37, being a commercial power source, for driving the LED 22, to the DC voltage; and a constant current circuit 37 for supplying a constant current to each LED element of the individual RGB configuring the LED 22. Further, the microcomputer 33 includes a memory 35 for storing the duty ratio of each LED element of RGB corresponding to the previously set color (preset color); and a control part 34 for transmitting a control signal controlling the constant current circuit 37 of each color at the duty ratio of the color selected by the user or the duty ratio of the color adjusted by the user.

Therefore, by the remote controller 30 for transmitting color information selected by the user, a receiving unit 31 for receiving the transmitted color information and transferring it to the microcomputer 33, and the aforementioned power supply control circuit part 9, each LED element of RGB configuring the LED 22, are driven at the duty ratio corresponding to the color desired by the user. Therefore, the illumination part 20 can be illuminated with a color desired by the user.

Further, the aforementioned structure shows a case that the first illumination part 2 and the second illumination part 3 are illuminated by the same color. However, by providing the constant current circuit 37 to the first illumination part 2 and the second illumination part 3 respectively, and providing control signals to the first illumination part 2 and the second illumination part 3 as different systems, the first illumination part 2 and the second illumination part 3 can be illuminated by different colors.
Further, by individually controlling the plurality of LEDs 22 provided to the first illumination part 2 and the second illumination part 3, illumination corresponding to an individual area of the image displayed in the screen is achieved.

Next, a control flow will be described in detail.
First, the user selects (S1) a desired color by using the remote controller 30, and the remote controller 30 transmits color information (S2). Next, the receiving unit 31 of the illumination device 1 receives a signal of the color information from the remote controller 30, and transfers the signal to the microcomputer 33 (S3). The control part 34 of the microcomputer 33 reads the duty ratio for driving each LED element of RGB stored corresponding to the color selected from the memory 35 in the microcomputer 33 in association with the signal regarding the transferred color (S4). The control part 34 drives each constant current circuit 37 for supplying constant current to each LED element of RGB, at the read duty ratio (S5). The light from each LED element from the illumination part 20 are mixed and radiated, to illuminate the periphery of the image display device by the color selected by the user (S8). Further, in a state of step S5, when the user selects other color by using the remote controller 30, processing returns to S1 again to repeat the flow from S1 to S5, and the periphery of the image display device is illuminated by other color selected by the user (S8).

Further, the user can adjust the intensity of each LED element of RGB individually from the remote controller 30, and also can illuminate the periphery of the image display device with other color, which is not set yet, in addition to the color previously set. In a state of step S5, when the user adjusts the color, strength/weakness of the intensity of each LED element of RGB is adjusted by using the remote controller 30, and the strength/weakness of the luminance is transmitted for every RGB by using the remote controller 30 (S6), then the duty ratio is adjusted (fluctuated) corresponding to the strength/weakness of each LED element of RGB transmitted from the remote controller (S7), and each LED element of RGB is driven at the adjusted duty ratio (S5), and the periphery of the image display device is illuminated by the color desired by the user (S8).

Further, the receiving unit 31 for receiving the signal from the remote controller 30 may be provided somewhere of the illumination device 1. However, the signal from the remote controller 30 needs to be received even if the illumination device 1 is installed at the backside of the equipment such as the image display device. Therefore, the receiving unit 31 is preferably provided at a place visible from the user, such as the stabilization part 16 of the leg portions 12, 13.
Further, the receiving part of the signal such as a channel provided to the image display device is used in common, and the signal for controlling the illumination of the illumination device 1 may be indirectly received through the image display device.

Further, although not shown, a groove is formed in the turning parts 5, 6, and the support part 4, and the wiring for connecting the LED substrate 23 and the power supply control circuit part 9 is preferably arranged along the groove. This is because the wiring is not visible from the front surface of the illumination body part 11, thus not impairing designability of an outer appearance.

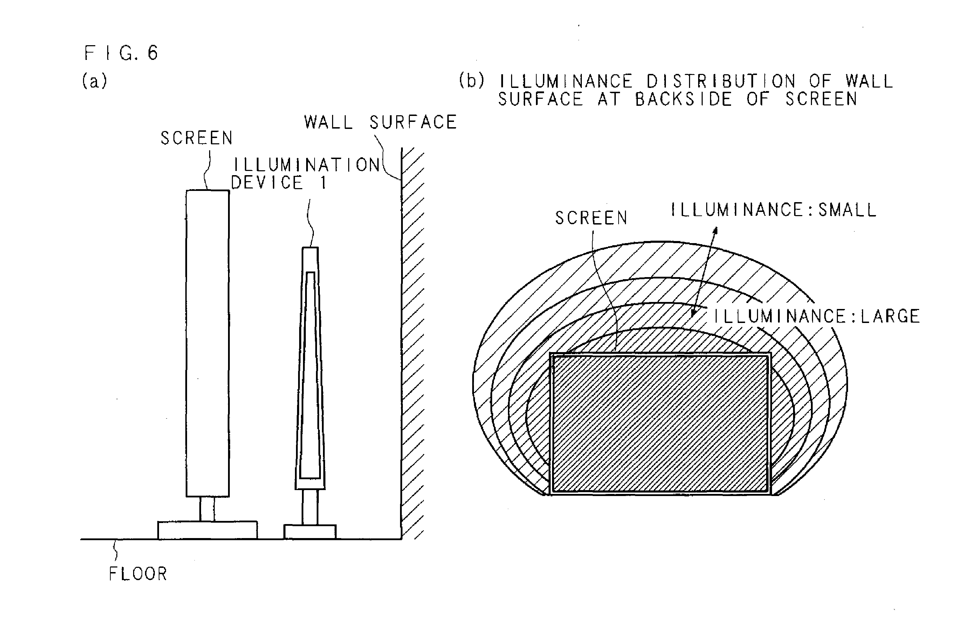

FIG. 6(a) is a view showing a state in which the illumination device 1 according to the first embodiment of the present invention is installed between the image display device and the wall surface at the backside of the image display device. FIG. 6(b) is a view showing illuminance distribution, when the wall surface at the backside of the image display device is illuminated by the illumination device 1 according to the first embodiment of the present invention.

When the illumination device 1 is installed between the image display device and the wall surface at the backside of the image display device, as shown in FIG. 6(b), the illuminance is gradually lowered as the wall surface recedes from the screen, by the illumination to the wall surface by the illumination device 1. Therefore the glare of the screen can be reduced. Further, higher realistic sensation can be given to the user. Moreover, the illumination device 1 can be freely carried and can be used independently for the purpose of use of indirect illumination by illuminating the periphery of the equipment, when applied to other various equipment.

Further, owing to the structure in which the support part 4 is fitted into the holding part 14, the leg portions 12, 13 can slide along the support part 4 and also be detached therefrom. The illumination body part can be directly attached to the image display device, by detaching the leg portions 12, 13 from the support part 4.

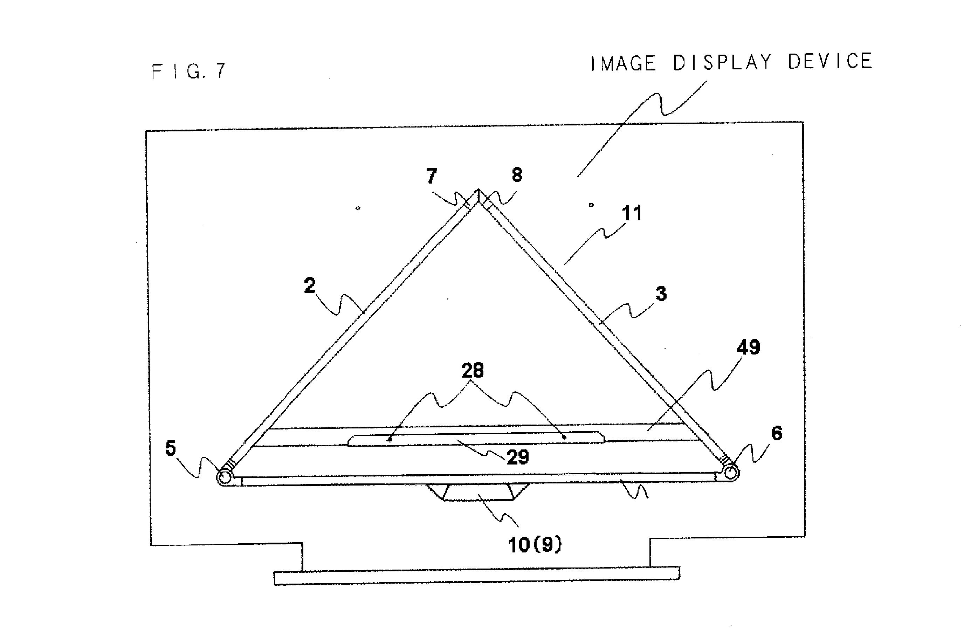

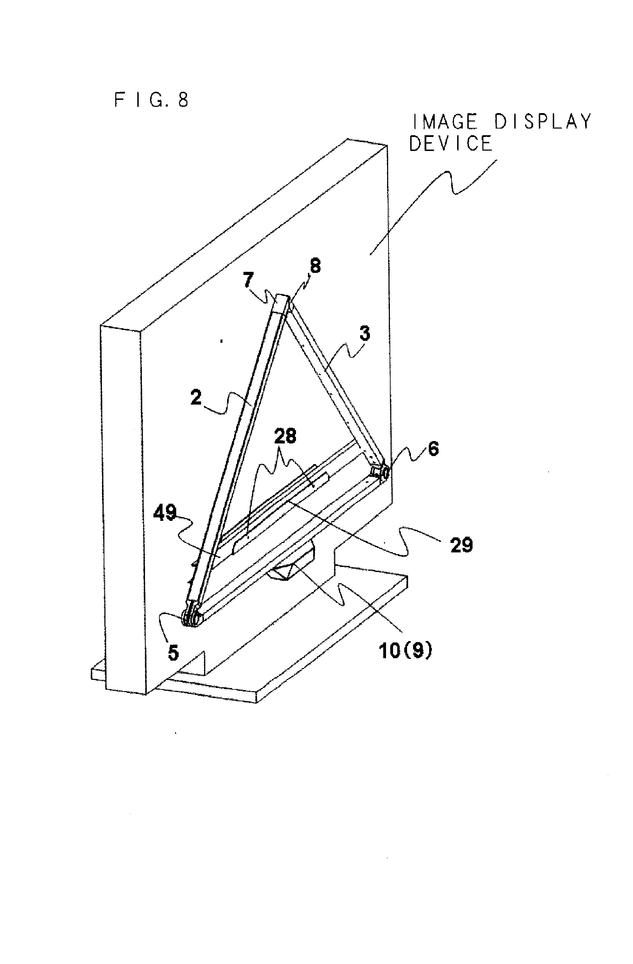

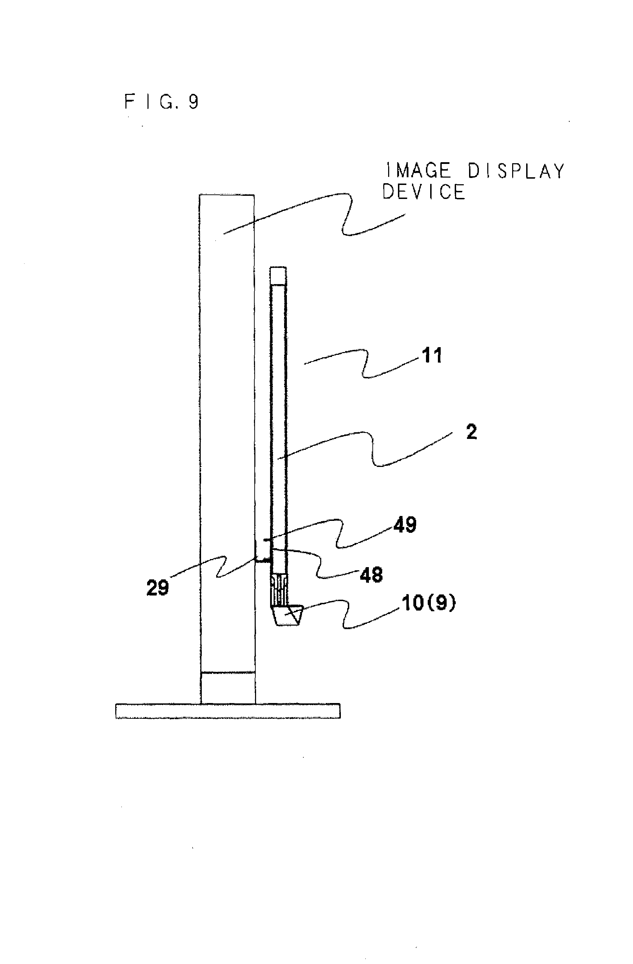

FIG. 7 is a plan view of an aspect of attaching the illumination body part according to the first embodiment, to the image display device, viewed from the rear surface of the image display device. FIG. 8 is a perspective view of the aspect of attaching the illumination body part according to the first embodiment, to the image display device. FIG. 9 is a view of the aspect of attaching the illumination body part according to the first embodiment, to the image display device, viewed from the lateral direction of the image display device.

Thinner image display device has been progressed, and a plurality of (two) wall hooking holes (not shown) for attaching the image display device to a wall, are provided on the rear surface of the image display device. Setting interval of the wall hooking holes are defined by, for example, the standard of the image display device. Further, in the illumination body part 11 of the illumination device 1, a plurality of attachment holes 28 are formed in the first illumination part 2 and the second illumination part 3.

In FIGS. 7 to 9, a first attachment support part 29 having U-shape turned sideways in cross-section is attached to the wall hooking hole of a rear surface the image display device by screwing, and a second attachment support part 49 is attached to an inner side face 48 of the first attachment support part 29 by screwing. Further, the illumination body part 11 is attached to the image display device by attaching the first illumination part 2 and the second illumination part 3 of the illumination body part 11, to both ends of the second attachment support part 49.
Thus, by directly attaching the illumination body part 11 to the image display device, the illumination body part 11 is housed within a screen size of the image display device, and the illumination body part 11 is out of sight of the user, thus making it possible to avoid bringing discomfort to the user due to existence of the illumination device.

As described above, in the illumination device 1 according to the first embodiment, the shape formed by the first illumination part 2, the second illumination part 3, and the support part 4 is the triangular shape, and different areas of the wall surface at the backside of the image display device are irradiated with light from different directions by the first illumination part 2 and the second illumination part 3, thus making it possible to efficiently and sufficiently irradiate the wall surface. Particularly, when the periphery of the image display device of a large screen is illuminated, the effect by indirect illumination is remarkable, by irradiating the different areas of the wall surface from different directions, by a plurality of illumination parts.
Note that the shape formed by the first illumination part 2, the second illumination part 3, and the support part 4, is not limited to the triangular shape and may be other shape, because the different areas of the wall surface may be irradiated with light from different directions, to efficiently irradiate the wall surface at the backside of the image display device. Regarding other shape, it will be described later as other embodiment.

Further, the illumination device 1 is used indoors, particularly in a living room, and therefore includes an element of an interior accessory. Thus, designability is important in this case. Accordingly, preferably, at least the parts visible from outside (support part 4, casing of the illumination part 2, turning parts 5, 6, leg portions 12, 13, power supply circuit box 10, and wiring) out of the parts configuring the illumination device 1 are entirely uniformed to the same color such as black. Owing to the unity of the color, the interior property of the room, in which the illumination device 1 is installed, is not impaired.

### (Second Embodiment)

Next, an illumination device 41 according to a second embodiment of the present invention will be described with reference to the drawings. Characteristic parts of the second embodiment will be described below, wherein the same reference numerals are assigned to the parts in common with those of the first embodiment, and the description thereof is omitted.

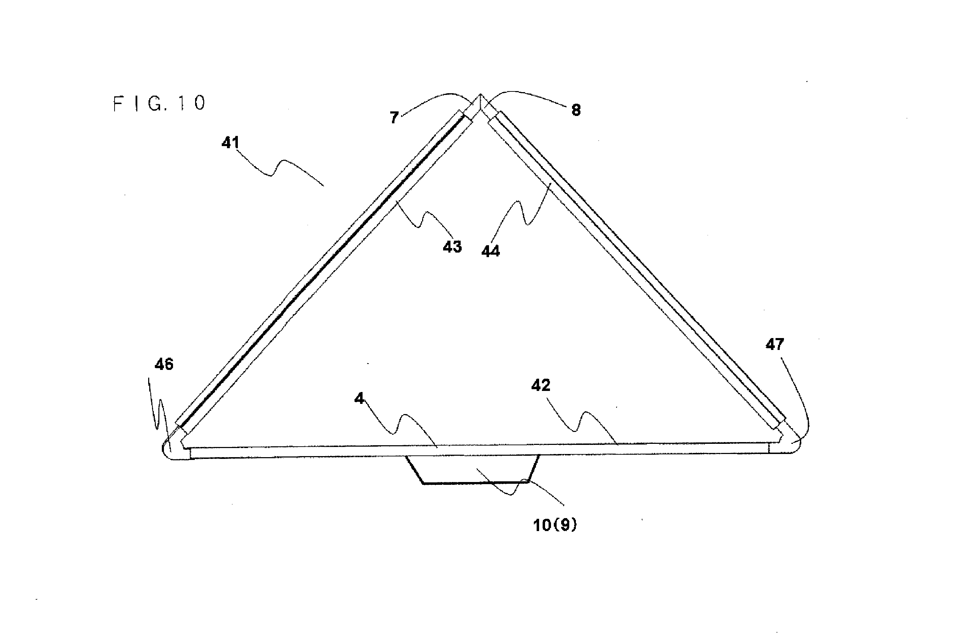

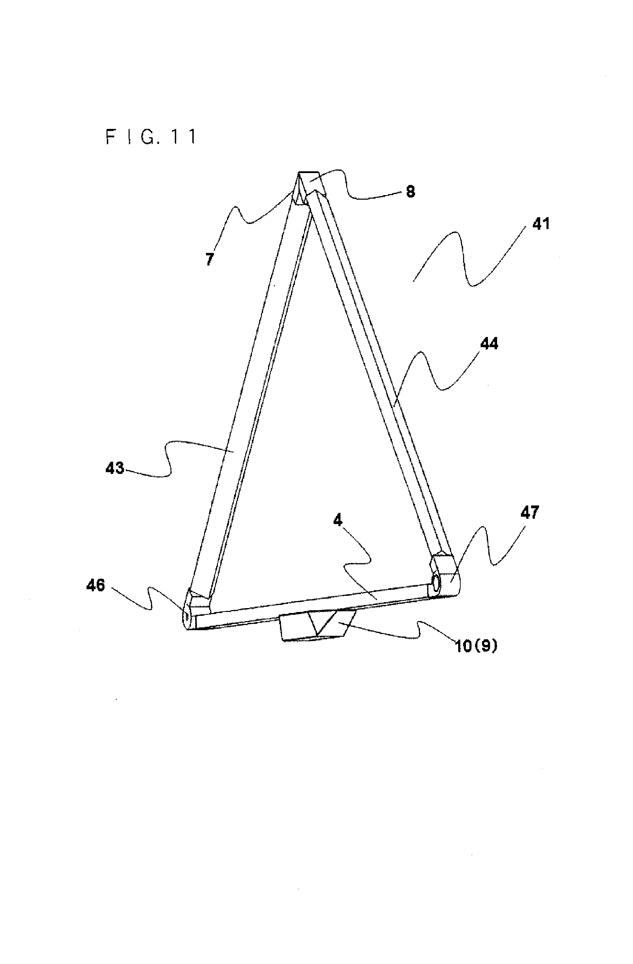

FIG. 10 is a schematic front view of an illumination body part 42 of the illumination device 41 according to the second embodiment of the present invention. FIG. 11 is a schematic perspective view of the illumination body part 42 of the illumination device 41 according to the second embodiment of the present invention.
The illumination device 41 according to the second embodiment includes a turning mechanism capable of turning in multiple directions (two directions), unlike the first embodiment wherein a first illumination part 43 and a second illumination part 44 can be turned only one direction with respect to the support part, with the first turning part and the second turning part as centers respectively.

The turning mechanism of turning the illumination part in multiple directions (two directions) will be described.
The turning mechanism includes a turning part (first turning part 46 and second turning part 47) for turning an illumination part 45 (first illumination part 43 and second illumination part 44) in a direction of being folded with respect to the support part 4, and a first turning shaft (not shown) communicated with the turning part and the illumination part 45 for turning the illumination part. By turning the illumination part 45, with the first turning shaft as a center, an irradiation range in the periphery of the illumination device that performs illumination can be varied. Therefore, for example, the user can arbitrarily set the irradiation range, for example, according to the size of the image display device, thus making it possible to apply the turning mechanism to the image display device of various sizes. In addition, the user can arbitrarily set the irradiation range according to an environment in which the irradiation device 41 is installed.

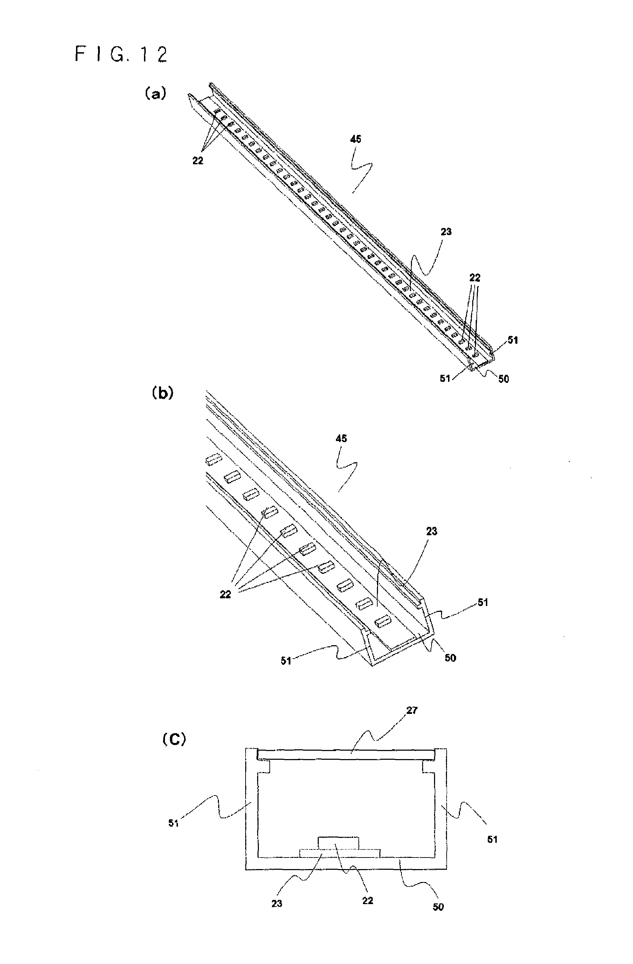

Next, the illumination part 45 will be described. FIG. 12(a) is a schematic perspective view of the illumination part 45 according to the second embodiment of the present invention, FIG. 12(b) is an enlarged schematic perspective view of the illumination part 45 according to the second embodiment of the present invention, and FIG. 12(c) is a schematic sectional view of the illumination part 45 according to the second embodiment of the present invention.

The illumination part 45 is made of aluminum and is formed into a shape with a part thereof is removed, so that inner part of the quadrangular prism has a U-shape turned sideways. The LED substrate 23, on which a plurality of LEDs 22 are mounted in a row, is installed on a bottom 50 inside of the illumination part 45. In the illumination device 41 according to the second embodiment, the illumination part 45 can be turned with the first turning shaft as a center, and therefore, unlike the first embodiment, there is no necessity for providing the inclined surface inside of the illumination part to change the irradiation direction in advance. In addition, the shape (U-shape turned sideways) of the illumination part according to the second embodiment is not complicated, compared with the shape of the illumination part according to the first embodiment, thus facilitating the manufacture and can reduce the cost.

Further, the light source is the LED 22 having high directivity. Therefore, even if the LED substrate 23 is provided on the bottom 50 of the illumination part 45 having U-shape turned sideways in a cross-section, almost there is no case that irradiation is blocked by the side face 51 of the irradiation part 45, resulting in losing light quantity. When the fluorescent lamp and the cold-cathode tube capable of irradiating in all directions with low directivity is used, as described in the first embodiment, the reflection plate is preferably provided inside of the illumination part 45.

### (Third Embodiment)

Next, an illumination device 61 according to a third embodiment of the present invention will be described with reference to the drawings. Characteristic parts of the third embodiment will be described below, wherein the same reference numerals are assigned to the parts in common with those of the first or second embodiment, and the description thereof is omitted.

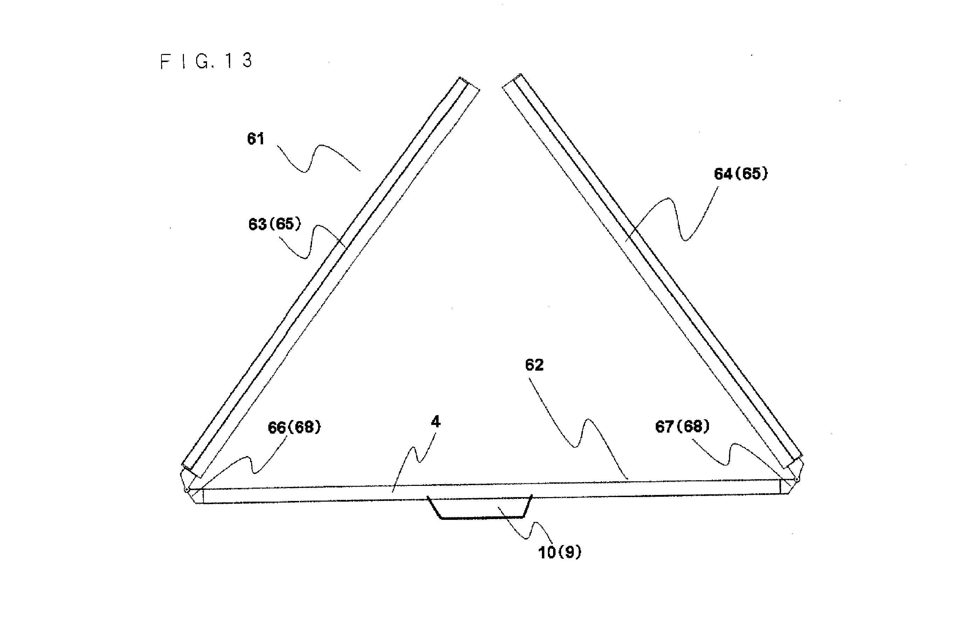

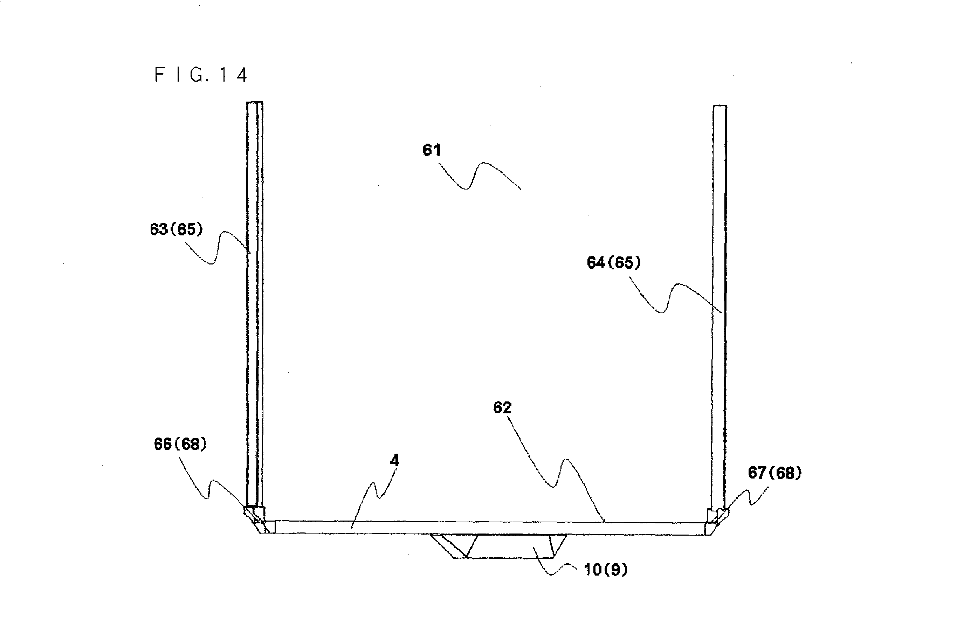

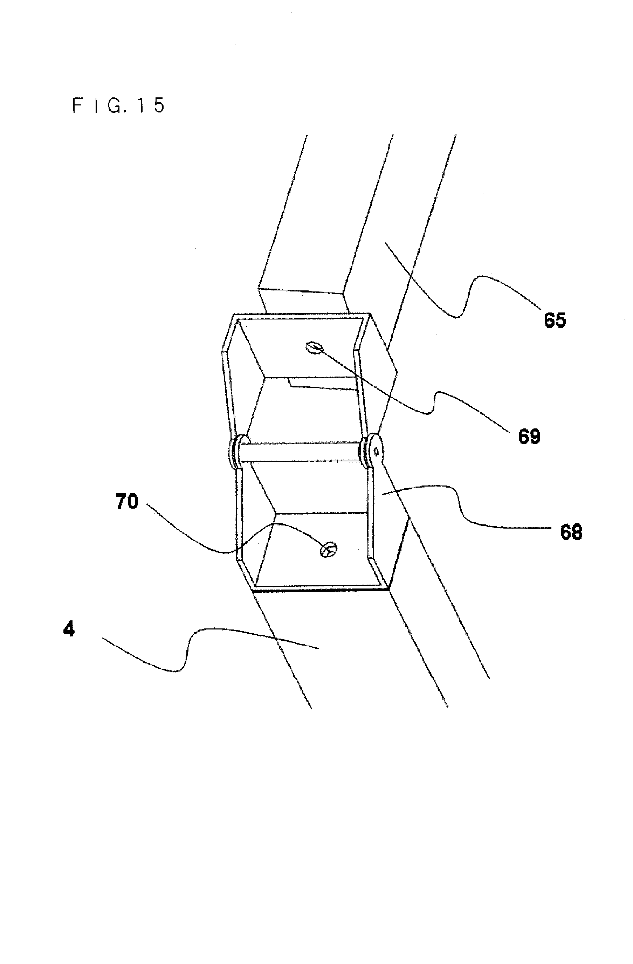

FIG. 13 is a schematic front view of an illumination body part 62 of the illumination device 61 according to the third embodiment of the present invention. FIG. 14 is a schematic perspective view of the illumination body part 62 of the illumination device 61 according to the third embodiment of the present invention. FIG. 15 is a schematic enlarged view of the turning mechanism of the illumination device 61 according to the third embodiment of the present invention.
As with the second embodiment, the illumination device 61 according to the third embodiment has the turning mechanism capable of turning in multiple directions.

The turning mechanism will be described in detail.
The turning mechanism includes a turning part 68 (first turning part 66 and second turning part 67) for turning an illumination part 65 (first illumination part 63 and second illumination part 64) in a direction of being folded with respect to the support part 4, and a first turning shaft 69 communicated with the turning part 68 and the illumination part 65, for turning the illumination part 65, and a second turning shaft 70 communicated with the turning part 68 and the support part 4, for turning the turning part 68.

Accordingly, turning of the turning part 68 is achieved with the second turning shaft 70 as a center, in addition to the turning in two directions similar to the illumination device 41 of the second embodiment (a direction in which the illumination part 65 is folded with respect to the support part 4, and a direction in which the illumination part 65 is turned with the first turning part 69 as a center). Note that in FIGS. 13 to 15, the structure is visible from outside so that the first turning shaft 69 and the second turning shaft 70 can be easily recognized. However, a cover part for covering such turning shafts may also be provided.
The turning part 68 can be turned with the second turning shaft 70 as a center, and therefore a relative position of the illumination part 65 is also changed, with turning of the turning part 68, thus increasing freedom degree of the illumination part 65 in a turning direction. Therefore, even when illuminating the image display device of various sizes and the periphery of the equipment other than the image display device, such a case can be suitably responded.

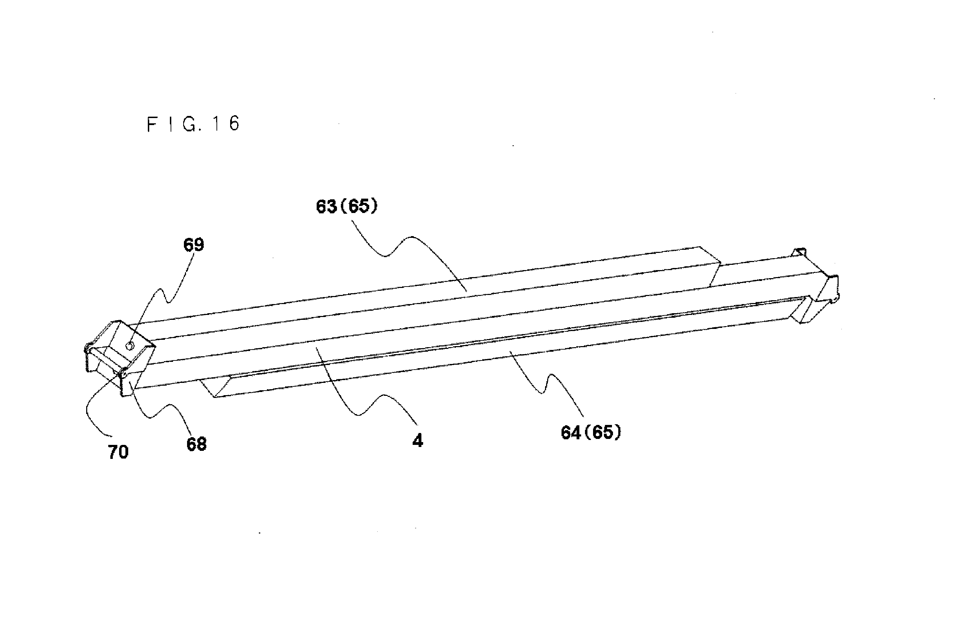

FIG. 16 is a schematic perspective view of a state in which the illumination part 65 of the illumination device 61 according to the third embodiment of the present invention, is folded with respect to the support part 4.
In the turning mechanism of the third embodiment, turning of the turning part 68 is achieved with respect to the support part 4, with the second turning shaft 70 as a center. Therefore, as shown in the figure, the illumination part 65 can be housed in a state of being compactly folded with respect to the support part 4.

### (Fourth Embodiment)

Next, an illumination device 71 according to a fourth embodiment of the present invention will be described with reference to the drawings. Characteristic parts of the fourth embodiment will be described below, wherein the same reference numerals are assigned to the parts in common with those of the first to third embodiments, and the description thereof is omitted.

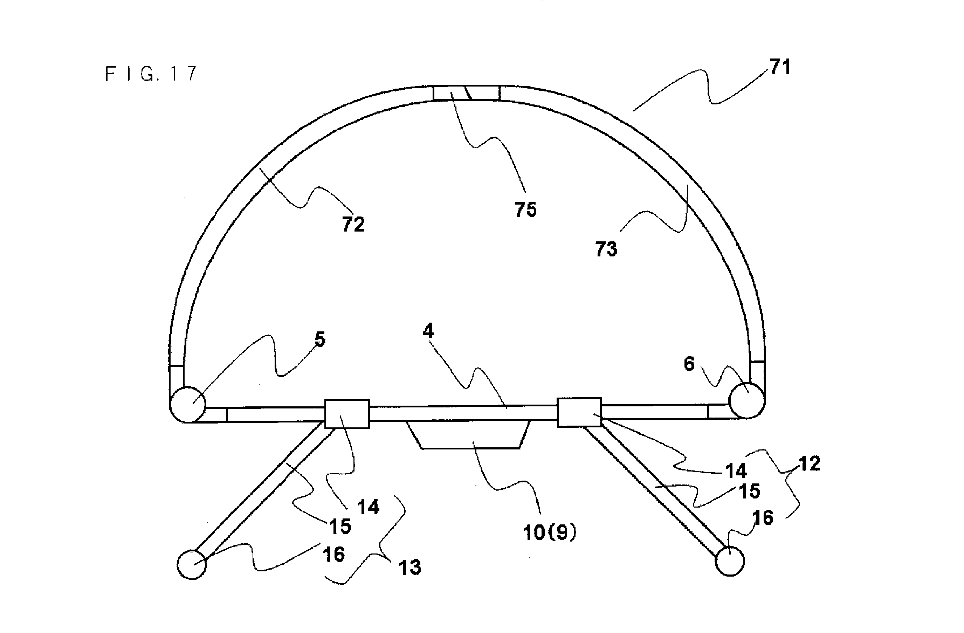

FIG. 17 is a schematic front view of the illumination device 71 according to the fourth embodiment of the present invention.
An illumination part 74 (first illumination part 72 and second illumination part 73) of the illumination device 71 according to the fourth embodiment is the illumination part with the quadrangular prism is bent so as to have a curved part (portion R), unlike the quadrangular prism-shaped illumination part described in first to third embodiments. The LED substrate, on which LEDs are mounted in a row along the curved part, is provided inside of the illumination part 74. Therefore, a thin type substrate is preferably one that can fit the curved part, as the substrate.

Further, as described in the first embodiment, the first illumination part 72 and the second illumination part 73 are fixed by a pair of lock part 75 provided on the opposed surfaces. A semi-circle state is formed by the first illumination part 72, the second illumination part 73, and the support part 4. Accordingly, the shape is further close to three sides (upper side and right and left sides) of the screen of the image display device, compared with the triangular shape, and therefore the periphery of the screen can be further efficiently illuminated.

### (Fifth Embodiment)

Next, an illumination device 81 according to a fifth embodiment of the present invention will be described with reference to the drawings. Characteristic parts of the fifth embodiment will be described below, wherein the same reference numerals are assigned to the parts in common with those of the first to third embodiments, and the description thereof is omitted.
The illumination device 81 according to the fifth embodiment does not have the triangular shape but has a rectangular shape formed by the illumination part and the support part, unlike the illumination device of first to third embodiments.

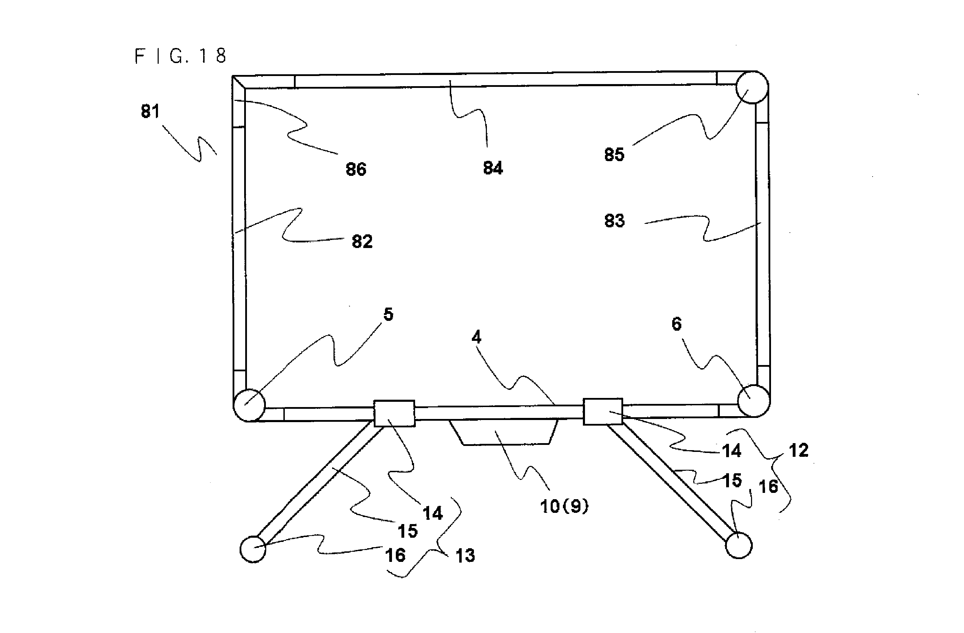

FIG. 18 is a schematic front view of the illumination device according to the fifth embodiment of the present invention.
The illumination device 81 of the fifth embodiment has a third illumination part 84 in addition to a first illumination part 82 and a second illumination part 83. The third illumination part 84 is connected to the illumination device 81 through a third turning part 85 with a connection side connected to the second turning part 6 of the second illumination part 83 provided on the opposite end portion, so as to be turned in a direction with respect to the second illumination part 83, with the third turning part 85 as a center.

Further, a pair of lock parts 86 described in the first embodiment are provided on the end portion not connected to the first illumination part 82 and the third illumination part 84, and the first illumination part 82, the second illumination part 83, the third illumination part 84, and the support part 4 are fixed in a state of forming the rectangular shape.

By increasing the illumination parts, different areas of the periphery of the illumination device 81 can be illuminated from various different directions, and therefore sufficient illuminance can be secured in the periphery. Further, the illumination parts are provided corresponding to three sides (upper side and right and left sides) of the screen of the image display device, and therefore surely sufficient illuminance can be secured in a lower surface periphery, thus making it possible to give the effect of indirect illumination to the user.

### (Sixth Embodiment)

Next, an illumination device 91 according to a sixth embodiment of the present invention will be described with reference to the drawings. The illumination device of the sixth embodiment is a modified example of the illumination device of the fifth embodiment, and the rectangular shape is formed by the illumination part and the support part.

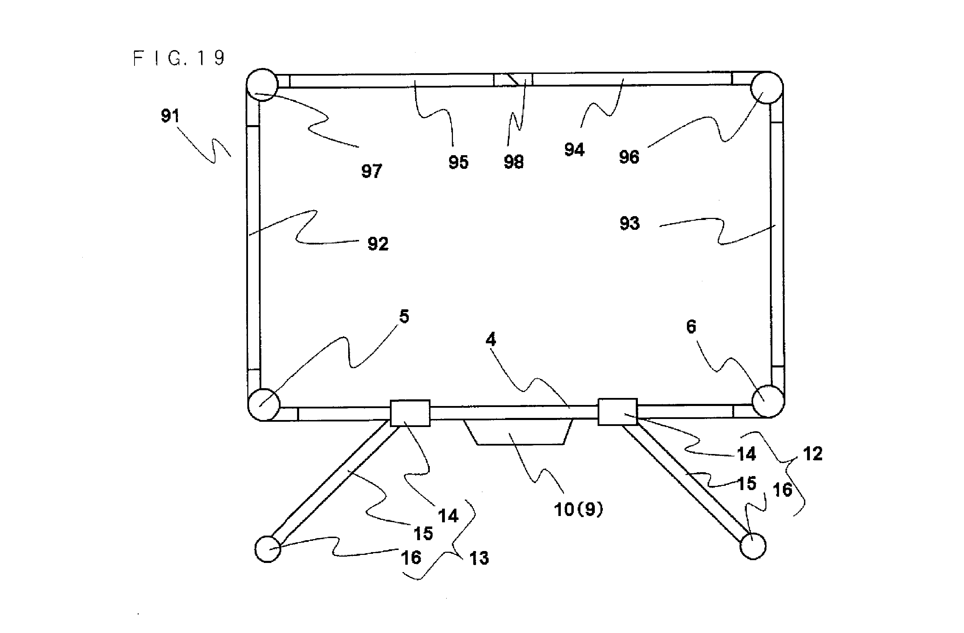

FIG. 19 is a schematic front view of the illumination device 91 according to the sixth embodiment of the present invention.
The illumination device 91 of the sixth embodiment has a third illumination part 94 and a fourth illumination part 95, in addition to a first illumination part 92 and a second illumination part 93. The third illumination part 94 is connected to the illumination device 91 through a third turning part 96 with a connection side connected to the second turning part 6 of the second illumination part 93 provided on the opposite end portion, and the fourth illumination part 95 is connected to the illumination device 91 through a fourth turning part 97 with the connection side connected to the first turning part 5 of the first illumination part 92 provided on the opposite end portion.
Further, a pair of lock parts 98 described in the first embodiment are provided on the end portion not connected to the third illumination part 94 and the turning part of the fourth illumination part 95, and the first illumination part 92, the second illumination part 93, the third illumination part 94, the fourth illumination part 95, and the support part 4 are fixed in a state of forming the rectangular shape. By increasing the illumination parts, similar effects as the fifth embodiment can be obtained.

Further, in the illumination devices of the aforementioned first to sixth embodiments, the support part has not only a function of supporting a plurality of illumination parts, but also may have a function as the illumination parts, by providing the light source (such as LED) to the support part itself.
In addition, in the illumination devices of the aforementioned first to sixth embodiments, the surface mount type package LED is used as the light source, on which each LED element of RGB is packaged. However, individually packaged LED is respectively provided for every RGB and a plurality of colors may be exhibited.
In order to make the illumination devices of the first to third embodiments illuminate suitably to the image display device having a 46-type screen size, the size of the illumination device is preferably set, so that a longitudinal length of a plurality of illumination parts is 60cm (69cm if the lock parts of the end portion and the turning part are included), the longitudinal length of the support part is 82cm, the size of a lateral width of the illumination device is 91cm, and a height is 69cm (height from a horizontal surface to the support part is 17cm). Thus, the periphery of the screen of the image display device can be effectively illuminated.
Note that in the aforementioned description, the vertical and right and left directions are the directions in a case of installing the illumination device on the horizontal surface as reference, and a lower direction shows a vertical lower direction normally.

### (Seventh Embodiment)

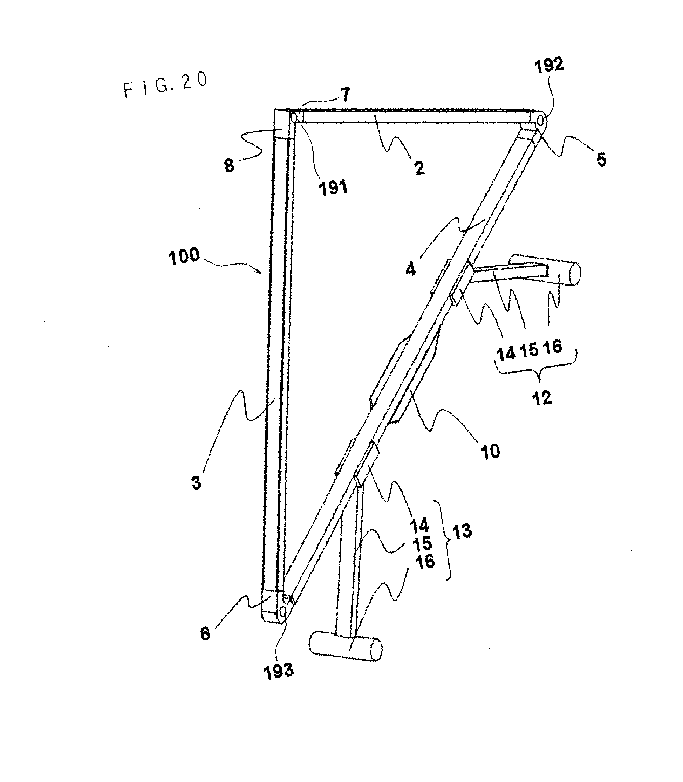

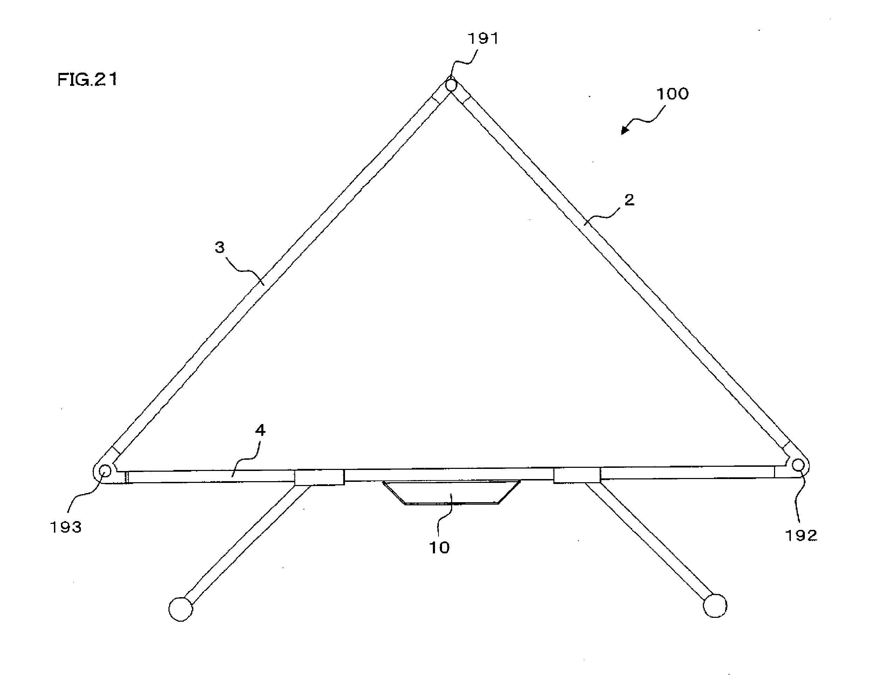

FIG. 20 is an outer appearance perspective view of an illumination device 100 according to a seventh embodiment, and FIG. 21 is an outer appearance front view of the illumination device 100 according to the seventh embodiment. The illumination device 100 includes light source parts 2, 3 in which a plurality of light emitting diodes (called "LEDs" hereinafter) are linearly arranged, and the support part 4 made of metal (such as aluminum) for supporting the light source parts 2, 3.

The support part 4 has a rectangular shape in cross-section, and has a suitable length, with both ends provided with turning parts 5, 6 having an axis (not shown) for pivotally supporting one end of the light source parts 2, 3, being as the illumination parts. Thus, the light source parts 2, 3 are turnably formed around the axes of the turning parts 5, 6. The turning parts 5, 6 have a frictional force of a predetermined magnitude so that the light source parts 2, 3 are held at a desired angle. In addition, a holding mechanism may be provided for stably holding the light source parts 2, 3 at a desired angle.

Lock parts 7, 8 are provided on the other end of the light source parts 2, 3. The lock parts 7, 8 have a pair of engaging structures (not shown) having concave portion and convex portion on the mutually opposed surfaces, and the other end portions of the light source parts 2, 3 can be fixed through engagement of the concave portion and the convex portion. By locking the lock parts 7 and 8 with each other, the light source parts 2, 3, and the support part 4 are formed in an appearance of an approximately triangular shape. Note that a lock structure is not limited to the engagement structure having the concave portion and the convex portion, and the engagement structure of other shape may be acceptable, and a structure of a lock locked by a magnetic body such as a magnet may also be acceptable.

A power supply control part 10, with a control circuit for controlling current supplied to the LED incorporated therein, is provided in approximately the center of the support part 4, for converting the AC voltage (AC100V) to a predetermined DC voltage and turning-on the LEDs of the light source parts 2, 3 in a required brightness and coloring.

Leg portions 12, 13 for installing the illumination device 100 on the floor, are fixed to a position suitably away from the center of the support part 4. The leg portions 12, 13 include respectively a holding part 14 formed into U-shape turned sideways in cross-section for sandwiching the support part 4; a leg body part 15 for supporting the holding part 14 at a predetermined angle with respect to the support part 4, with one end fixed and attached to the holding part 14; and a stabilization part 16 provided on the other end of the leg body part 15 and having a suitable weight so that the illumination device 100 is stably erected. In addition, a member (cover) for covering the support part 4, the power supply control part 10 and the like can also be provided.

Further, the user can arbitrarily set user preference, the size of the image display device, and an angle formed by the leg body part 15 of the leg portions 12, 13 and the support part 4, for adjusting the height of the light source parts 2, 3 from the floor surface.

Light receiving parts 191, 192, 193, being acquisition parts for acquiring information regarding an illumination environment such as luminance of the peripheral (backside) wall surface (reflection surface) of the image display device, luminance distribution, and chromaticity, are arranged in the vicinity of each vertex of the triangular shape configured by the light source parts 2, 3, and the support part 4. Details of the light receiving parts 191 to 193 will be described later.

FIGS. 20 and 21 show examples of forming the triangular shape by two light source parts 2, 3, and the support part 4. However, the present invention is not limited thereto, and a rectangular shape and a polygonal shape may also be acceptable. Further, the number of the light source parts is not limited to two, and it may be one, or three or more. In a case of providing one light source part, for example, a linear light source part can be horizontally disposed at the backside of the image display device, along an upper side edge of the image display device. Further, in a case of using three or more light source parts, each light source part can be disposed approximately in a circular shape.

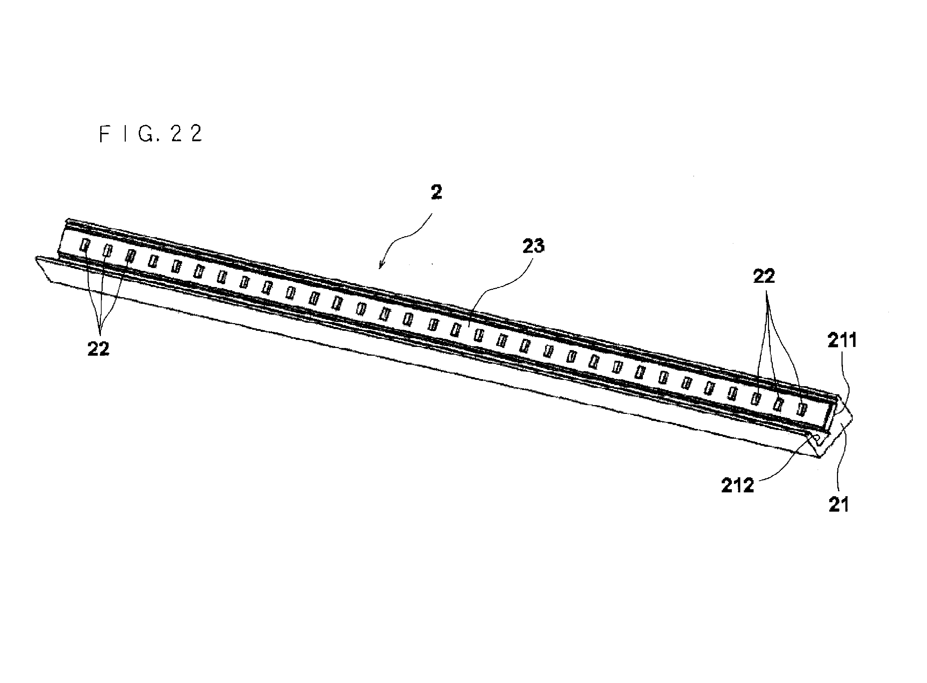

FIG. 22 is an explanatory view showing an example of the structure of the light source part 2. The light source part 3 has also the similar structure, and therefore only the light source part 2 will be described. The light source part 2 includes a casing part 21, a substrate 23 housed in the casing part 21, and a plurality of LEDs 22 mounted on the substrate 23.

The casing part 21 is a frame body made of aluminum having a suitable length, with one side face opened, for housing the substrate 23 in a longitudinal direction. Thus, heat generated by the LED 22 can be efficiently diffused. An inclined surface 211 in contact with the rear surface of the substrate 23 and a bottom surface 212 are formed on the opening side sectional face of the casing part 21, so that a predetermined angle is formed by a substrate surface of the substrate 23 and the bottom surface 212, with the substrate 23 fixed to the inclined surface 211.

For example, the angle formed by the inclined surface 211 and the bottom surface 212 is preferably set to approximately 30 degrees. When the inclination angle of the inclined surface 211 is small, in such a manner as to be almost flush with the bottom surface 212, the light from the LED 22 is emitted in a direction approximately parallel to the wall surface at the backside of the image display device, thus lowering the illuminance (luminance) of the wall surface. Further, when the inclination angle of the inclined surface 211 is large in such a manner as to form approximately a right angle surface with respect to the bottom surface 212, the light from the LED 22 is emitted in a direction approximately vertical to the wall surface at the backside of the image display device, and only the wall surface immediately backside of the image display device is irradiated with light, thus lowering the illuminance (luminance) of the peripheral wall at the backside of the image display device. Accordingly, in order to efficiently irradiate the wall surface at the backside of the image display device with the light from the LED 22, a suitable angle is needed. In addition, the height of the bottom surface 212 is preferably set, so that the light emitted from the LED 22 is not blocked by the casing part 21 itself.

The substrate 23 is, for example, a glass epoxy substrate, on which mount components such as a resistance element and a connector (none of them is shown) are mounted, in addition to the plurality of LEDs 22. Note that the surface of the substrate 23 where no mount components such as LEDs 22 is mounted, is desirably painted in white, so that the light emitted from the LEDs 22 are not absorbed by the substrate 23.

The LED 22 is a surface mount type package LED on which the LED elements of three colors of red (R) LED element, blue (B) LED element, and green (G) LED element are packaged. Light emission intensity of each LED element of RGB can be controlled, and therefore by adjusting the light emission intensity (luminance) of the LED element of each color, irradiation of multiple colors is achieved by LED. Thus, the periphery (such as backside wall surface) of the image display device can be illuminated by a favorite color of the user. In addition, it is also acceptable that the LED 22 is not the package LED including the LED elements of RGB, but is an LED chip of each color of RGB, wherein the LED chip of each color of RGB is arrayed in the light source part.

Particularly, by illuminating the periphery of the image display device by controlling the chromaticity of the LED 22, so as to obtain similar colors as the picture displayed in the screen of the image display device (particularly the picture in an area of an outer peripheral part of the screen), the picture having an expansion of not less than the size of the screen can be provided to the user (viewer), thus making it possible to give further realistic sensation to the user.

Note that the light source is not limited to the LED, and other light source such as a fluorescent lamp and a cold cathode tube may also be used. However, the directivity of the LED is high, and therefore the wall surface of the periphery of the image display device can be efficiently irradiated, and the control of the irradiation direction is easy. In a case of using the light source with not high directivity like the fluorescent lamp and emitting light in all directions, a reflection member for reflecting the emitted light is preferably provided to inside of the light source part 2.

In an example of FIG. 22, one substrate 23 is housed in the light source part 2. However, the present invention is not limited thereto, and two or more substrates may be housed therein. Even if failure of the LED on the substrate occurs, only the substrate, on which the defective LED is mounted, may be exchanged, and the cost required for exchange can be reduced.

Further, by shortening dimensions of the plurality of substrates and separately arranging the substrates from each other, the number of LEDs mounted in the vicinity of the center of the light source parts 2, 3 can be reduced, and the cost required for the entire illumination device can be reduced. As shown in FIG. 21, in a case of the illumination device 100 wherein two sides of a triangle is formed by the light source parts 2, 3, when the illumination device 100 is disposed at the backside (rear side) of the image display device, a part where the LED is not mounted in the vicinity of the center of the light source parts 2, 3 is located at a position away from the peripheral edge of the image display device, thus giving almost no influence to the illuminance (luminance) of the upper side periphery and right and left peripheral wall surface of the screen of the image display device viewed from the viewer, thus making it possible to sufficiently secure the illumination environment (optical environment) for giving the effect (realistic sensation) of indirect illumination to the viewer.

Further, a transparent cover made of synthetic resin may also be provided, for protecting the substrate 23 on which the LEDs 22 are mounted. In addition, the cover may include a diffusion filter for diffusing the light emitted from the LEDs 22. Thus, the light emitted from the LEDs 22 having high directivity are diffused, and a brightness distribution of the wall surface at the backside of the image display device can be made smooth.

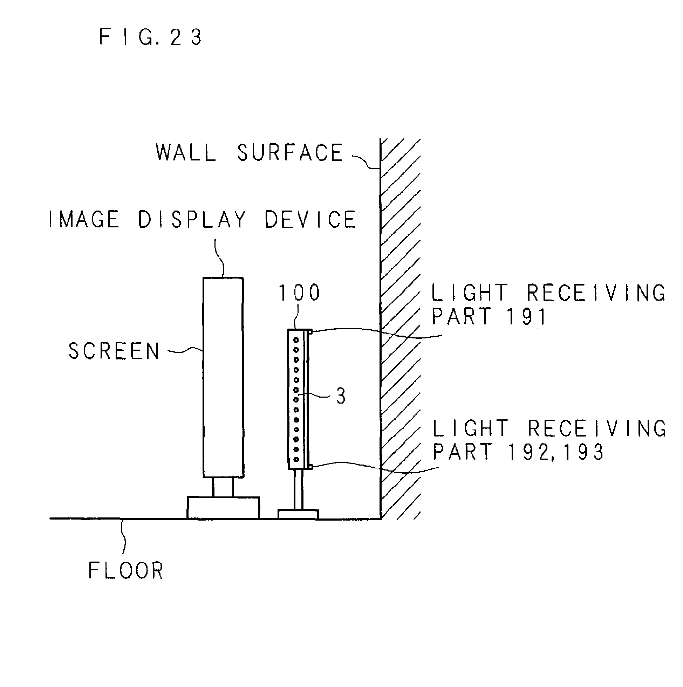

FIG. 23 is an explanatory view showing an installation example of the illumination device 100 according to a seventh embodiment. As shown in FIG. 23, the illumination device 100 is installed at the backside of the image display device and between the image display device and the backside wall surface (reflection surface). The backside wall surface of the image display device is irradiated with light from the light source part 3, in a state that the illumination device 100 is installed. Further, the same thing also applies to the light source part 2 (not shown).

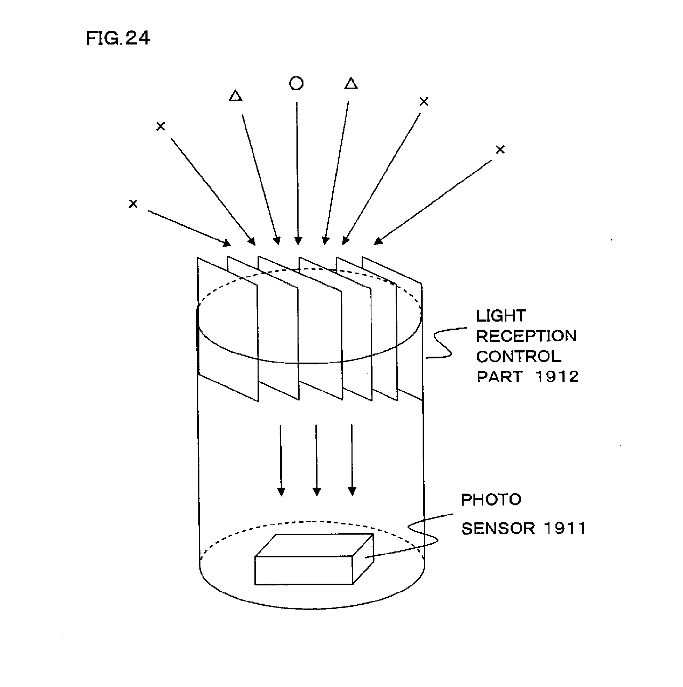

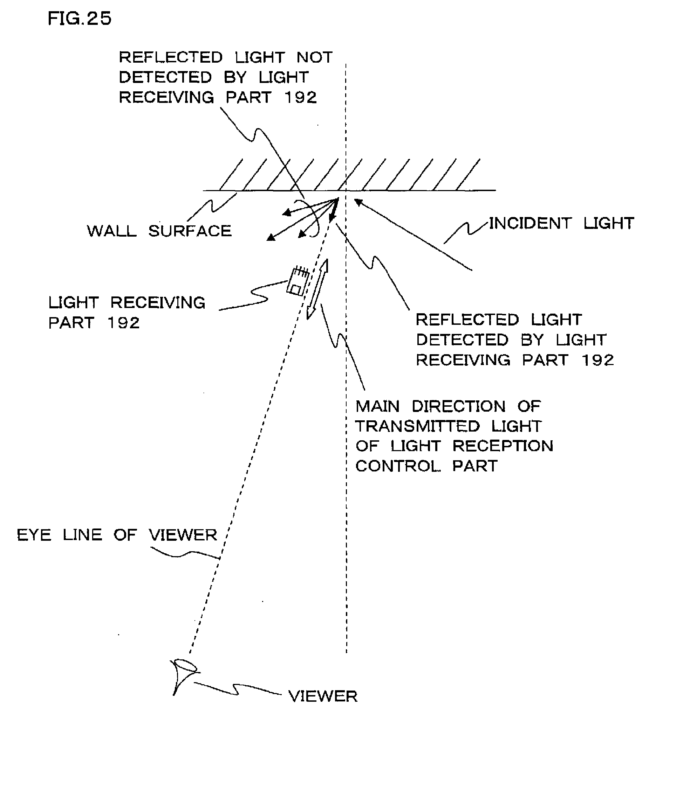

FIG. 24 is an explanatory view showing an example of the structure of the light receiving part 191. The light receiving parts 192 and 193 have similar structures. Further, FIG. 25 is an explanatory view showing an arrangement example of the light receiving part 192. FIG. 25 shows a case of viewing a floor surface from a ceiling. The same thing also applies to the light receiving part 193. As shown in FIG. 24, the light receiving part 191 includes a photo sensor 1911, a light reception control part 1912, and the like.

The photo sensor 1911 includes photoelectric conversion elements having sensitivity at least in a visible light wavelength region, like the elements such as CdS cell, photodiode, and phototransistor, and capable of detecting the luminance of the reflection surface (wall surface) for reflecting the light emitted from the LEDs 22 of the light source part 23. Further, for example, if the photo sensor 191 is formed as a color sensor with a structure of using three photodiodes having sensitivity for each of the red, blue, and green colors, or a structure in combination with a color filter of red, blue, and green, with a plurality of photodiodes arranged as a photodiode array, the chromaticity and the chromaticity distribution, etc, of the reflection surface can be detected. In addition, in this case, sensitivity characteristic of RGB of the photo sensor 1911 and light emission wavelength characteristic of the LED 22 are matched with each other, to thereby accurately control the light source according to the color of the light reflected from the reflection surface. Therefore, a preferable illumination environment can be realized.

The light reception control part 1912 has, for example, a Louver structure and a structure such as slit or pinhole having a prescribe thickness, and controls a direction of an incident light detected by the photo sensor 1911. In addition, as the light reception control part 1912, a light control film, a polarized filter, or the like, can also be used in a display screen of a personal computer, a cell-phone, or the like, which functions in the same way as a film provided for the purpose of preventing look-in from side.

Thus, as shown in FIG. 24, for example, the directivity of the light receiving part 191 can be regulated, so as to receive only the light (by symbol "o" in the figure) incident on a light receiving surface of the light receiving part at approximately vertical incident angle (approximately 0 degree in this embodiment) incident on the light receiving part 191. Thus, the incident light with large incident angle (shown by Δ and × in the figure) is not received. Then, as shown in FIG. 25, the light receiving part 192 is provided, so that a direction of the directivity of the light receiving part 192 coincides or is approximated with/to a direction in which the viewer views the image display device. Thus, out of the light from the reflection surface (such as wall surface) at the backside of the image display device, the light that can be caught by a viewer's eye level can be detected when the picture in the screen of the image display device is viewed by the viewer, thus making it possible to accurately acquire the luminance and/or chromaticity of the wall surface that can be recognized by the viewer's eye level. Further, irrespective of setting conditions of an angle or a material of the backside wall of the image display device, and further regarding a degree of an influence of solar light or light by other illumination device as well, an illumination environment on the wall surface can be acquired by the viewer's eye level.

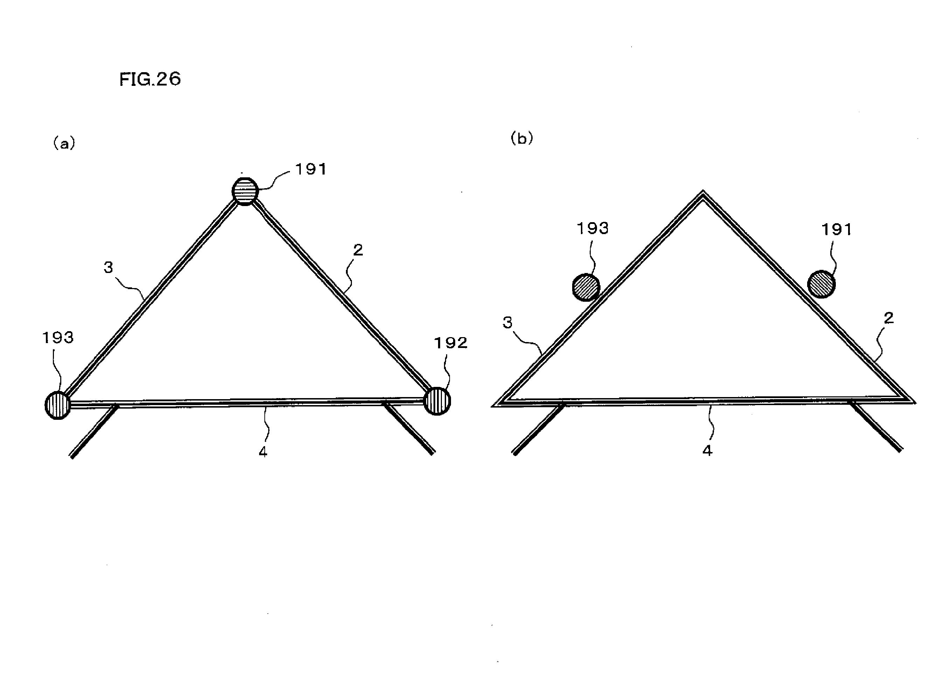

FIG. 26 is an explanatory view showing an example of installation positions of the light receiving parts 191, 192, and 193. FIG. 26(a) shows an example of installing three light receiving parts 191 to 193 separately from each other by a suitable length, and FIG. 26(b) shows an example of installing two light receiving parts 191, 193 separately from each other by a suitable length. As shown in FIG. 26(a), when the illumination device 100 is disposed at the backside (rear side) of the image display device, the light receiving parts 192, 193 are provided at a position close to edge parts of right and left of the image display device, and the light receiving part 191 is provided at a position close to approximately the center of an upper side edge of the image display device. Alternatively, as shown in FIG. 26(b), the light receiving parts 191, 193 can also be provided at a position close to the edges of the right and left of the image display device. Further, when the light reception control part having the Louver structure is used, the reflected light that can be recognized by the viewer can be accurately detected as much as possible, by providing the Louver structure to the light receiving parts 191 to 193 shown in FIG. 26 in a direction shown by lines. By providing a plurality of light receiving parts separately from each other by a suitable length, a desired illumination environment can be realized at a plurality of places in the periphery of the equipment such as the image display device.

When the viewer views the picture in the screen of the image display device, the viewer recognizes the light from the backside reflection surface (such as wall surface) which is not blocked by the image display device. Therefore, by providing the light receiving parts 191 to 193 in the vicinity of the edge of the image display device, the reflected light that can be recognized by the viewer can be accurately detected as much as possible. Further, since the reflected light of the edge of the screen is detected and the light source is controlled, faithful illumination is achieved by the display of the screen. Therefore, the effect of indirect illumination can be increased, and the viewer feels the expansion of the screen, thus improving the realistic sensation.

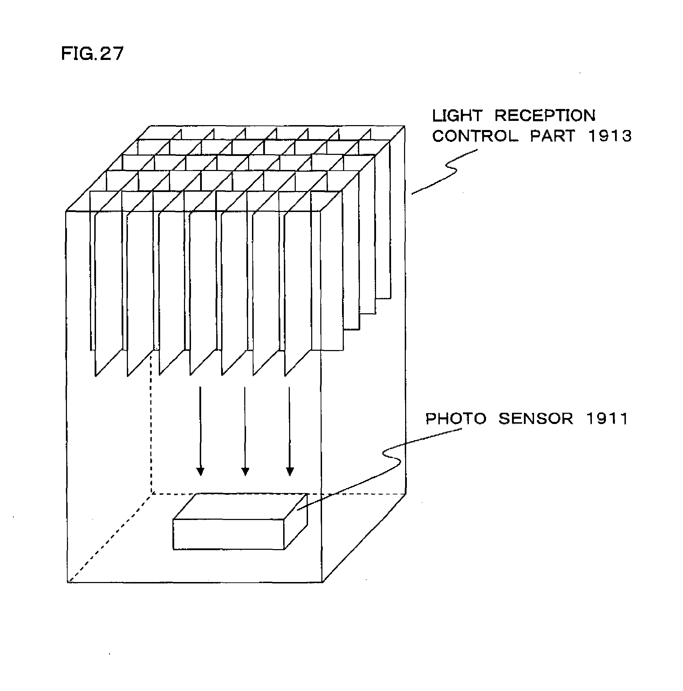

FIG. 27 is an explanatory view showing other configuration example of the light receiving part 191. In the example of FIG. 27, mutually orthogonal Louver structure is used, to further increase the directivity of the light received by the light receiving part 191. When the pinhole is used, by further increasing a length dimension of the light receiving part 191 in a direction of incoming the reflected light, only the light reflected in a direction of a predetermined angle can be surely received. Further, when the directivity of the received light is increased, light quantity passing through the light reception control part 1913 is reduced. Therefore, the element having high sensitivity capable of converting even an imperceptible light to an electric signal, may be used as the photo sensor 1911.

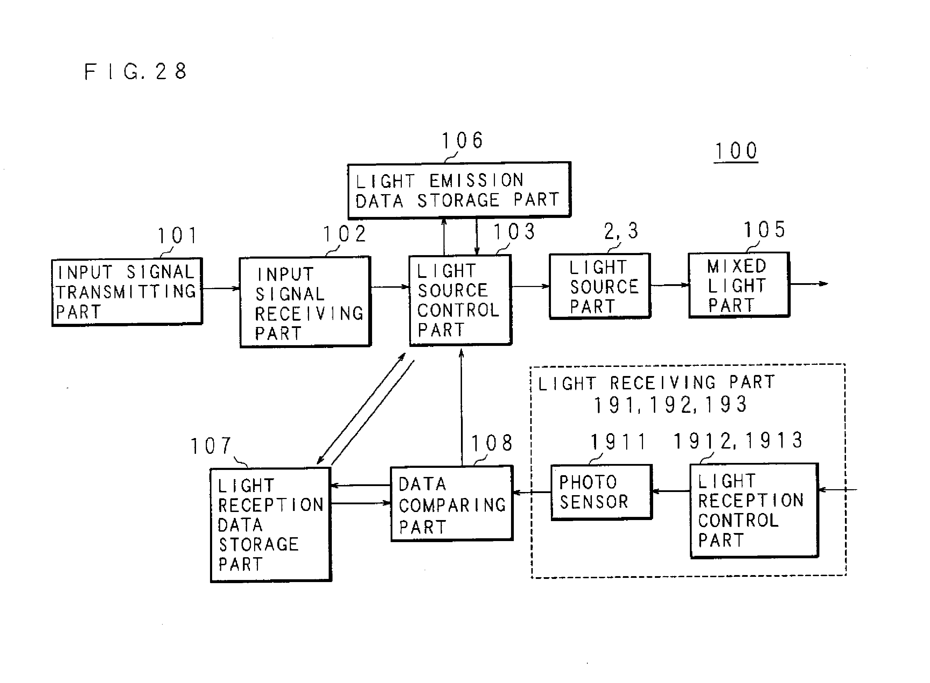

FIG. 28 is a block diagram showing the structure of the illumination device 100 according to the seventh embodiment. The illumination device 100 includes: an input signal transmitting part 101 provided to an operating terminal such as a remote controller; an input signal receiving part 102; a light source control part 103; light source parts 2, 3 such as LEDs 22; a light mixing part 105; an light emission data storage part 106; a light reception data storage part 107; a data comparing part 108; and the aforementioned light receiving parts 191 to 193.

The input signal transmitting part 101 transmits an input signal according to an operation of the viewer, to the input signal receiving part 102 in a wired or wireless way. The input signal includes, for example, an illumination on/off signal for turning on/off the illumination of the illumination device 100; a sensor on/off signal for controlling whether or not the luminance, etc, of the reflection surface (wall surface) of the light receiving part 191 is detected; and an illumination control signal for controlling the luminance, luminance distribution, and chromaticity of the illumination of the illumination device 100.

The input signal receiving part 102 outputs the received input signal to the light source control part 103.

When the illumination "on" signal is included in the input signal, the light source control part 103 acquires light emission data stored in the light emission data storage part 106 according to the acquired illumination control signal, and based on the acquired light emission data, generates light source control data, and outputs the generated light source control data to the light source parts 2, 3. The light emission data includes a light controlling signal to a plurality of light sources. For example, when the light source is LED, the duty ratio for modulating pulse width is given, to determine a value of current flown through the LED and the timing of flowing the current.

When the light source is the surface mount type package LED on which the LED elements of three colors of red (R) element, blue (B) LED element, and green (G) LED element are packaged, the chromaticity can be controlled by controlling the luminance, for every LED element of each color of RGB.

The light source parts 2, 3 cause the light source such as LED to emit light, according to the inputted light source control data.

The light mixing part 105 is a light diffusing filter and has a function of applying light emitted from the light source parts 2, 3, as even and uniform light as much as possible. For example, void or frosty glass can be used in the light mixing part 105. Note that the transmittance of light is preferably higher.

When the sensor "on" signal is included in the input signal, under the control of the light source control part 103, the data comparing part 108 compares light information S obtained by detecting the luminance, chromaticity, and luminance distribution, etc, of the reflection surface (wall surface) by the light receiving part 191, and light information T stored in the light reception data storage part 107. The data comparing part 108 outputs a comparison result to the light source control part 103. Light information S, T includes information regarding luminance, chromaticity, and luminance distribution, etc. The light information T previously stored in the light reception data storage part 107 can be the light information in the wall surface, when the image display device and the illumination device are installed at prescribe positions in front of the wall surface, which is an ideal place.

The light source control part 103 increases/decreases the light quantity of the light source parts 2, 3, according to the inputted comparison result, or adjusts the chromaticity. By such processing, the illumination device 100 capable of responding to various installation places can be realized, by repeating adjustment of light emission of the light source parts 2, 3, until the light information S and the light information T satisfies a predetermined coincidence condition (for example, a difference between the light information S and the light information T falls within a predetermined range).

Note that depending on an environment of installing the image display device, there is a circumstance that the luminance, chromaticity, luminance distribution, and the like of the wall surface are extremely different, compared with a normal case. In such a case, there is a possibility that the luminance, chromaticity, luminance distribution, and the like of the wall surface cannot be adjusted within a desired range. Therefore, the viewer needs to be notified of some warning.

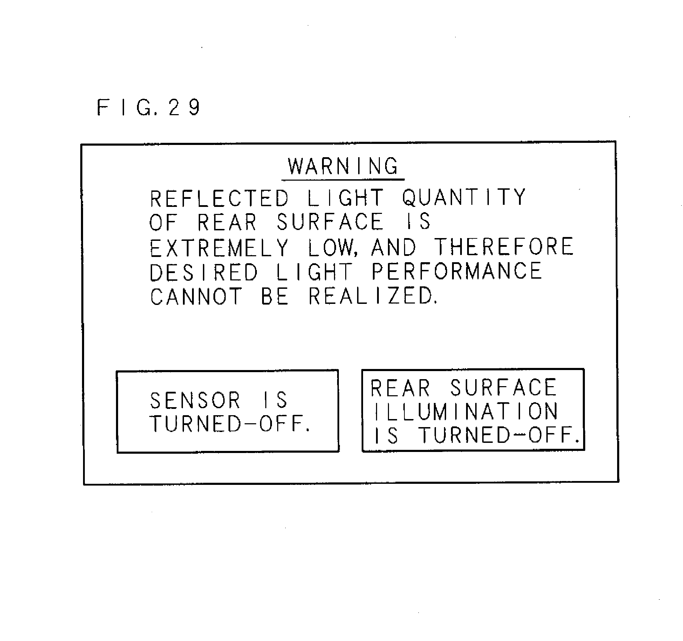

FIG. 29 is an explanation showing a display example of the warning. In a case that the image display device is installed further away from the backside wall surface (reflection surface), there is a possibility that the light quantity of the light source parts 2, 3 continues to increase until a desired luminance is obtained, when the wall surface has an extremely low reflectance like a black wall paper or wall material. In order to prevent such a state, an upper limit of the light quantity is previously set, and when the light quantity to be adjusted exceeds the upper limit, as shown in FIG. 29, the warning can be displayed to urge the viewer to turn-off the sensor or turn-off backside illumination.

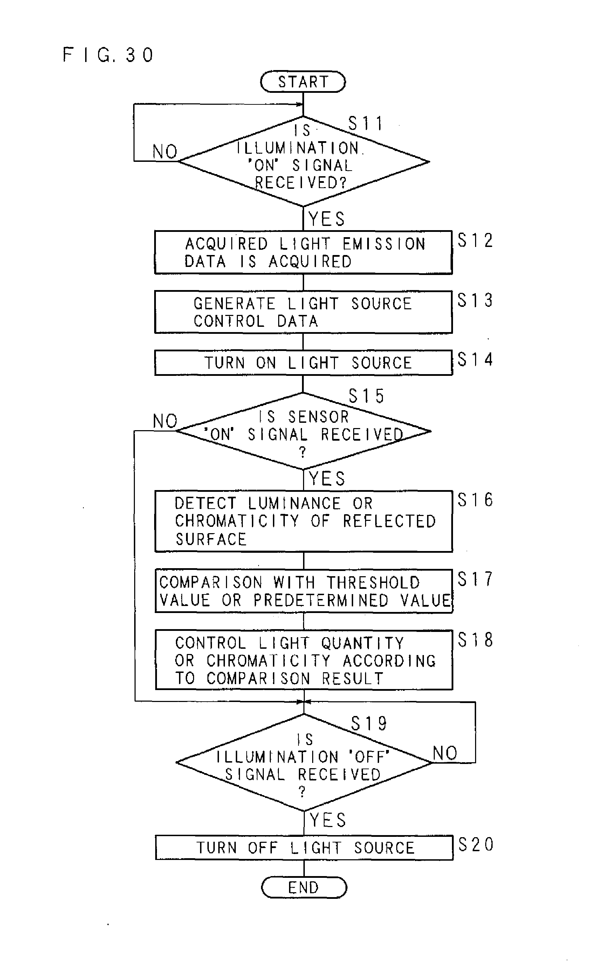

Next, an operation of the illumination device 100 of the seventh embodiment will be described. FIG. 30 is a flowchart showing a processing procedure of the illumination device 100 according to the seventh embodiment. The light source control part 103 determines whether or not an illumination "on" signal is received (S11), and when the illumination "on" signal is not received (NO in S11), the processing of step S11 is continued.

When the illumination "on" signal is received (Yes in S11), the light source control part 103 acquires the light emission data (S12), and generates the light source control data according to the acquired light emission data (S13), to thereby turn-on the light source (S14).

The light source control part 103 determines whether or not the sensor "on" signal is received (S15), and when the sensor "on" signal is received (YES in S15), detects the luminance or chromaticity of the reflection surface (wall surface) (S16). The light source control part 103 compares the detected luminance or chromaticity and a threshold value or a predetermined value (S17). Here, the threshold value is the threshold value with respect to the luminance of the reflection surface, and the predetermined value is, for example, the chromaticity set by the viewer.

The light source control part 103 controls the light quantity or chromaticity of the light source parts 2, 3 according to the comparison result (S18), and determines whether or not the illumination "off" signal is received (S19). Meanwhile, when the sensor "on" signal is not received (NO in S15), the light source control part 103 performs processing of step S19.

When the illumination "off" signal is not received (NO in S19), the light source control part 103 continues to perform processing of step S19, and when the illumination "off" signal is received (YES in S19), turns off the light source (S20), and ends the processing.

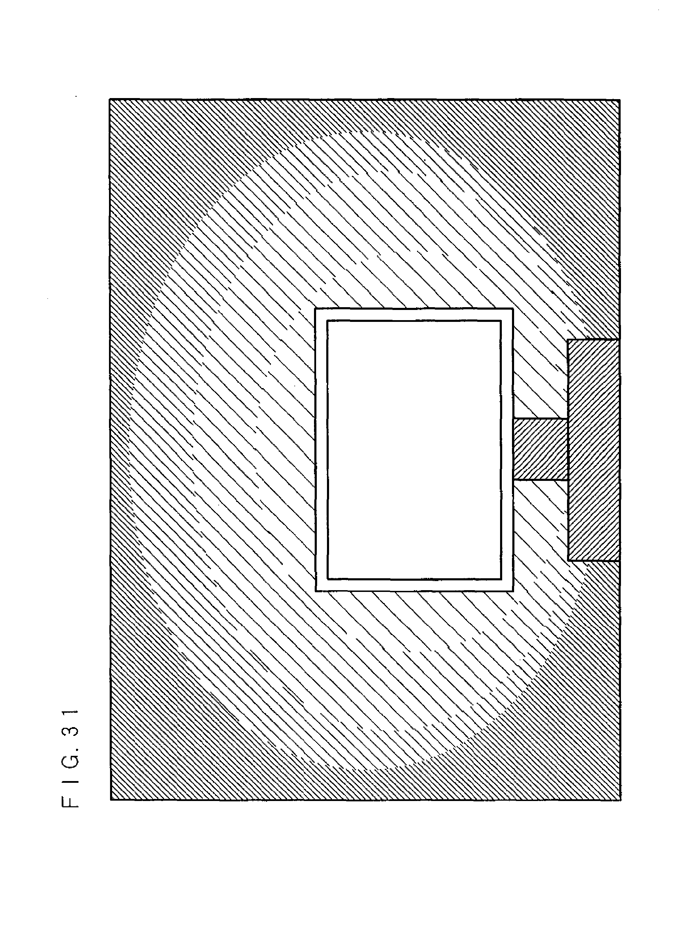

FIG. 31 is an explanatory view showing an example of indirect illumination by the illumination device 100 according to the seventh embodiment. As shown in FIG. 31, the illumination device 100 is disposed behind the image display device at a position where the viewer cannot view directly. The wall surface is irradiated with the light emitted from the light source parts 2, 3 from the backside (rear side) of the image display device. Thus, it is possible to achieve the illumination environment having the luminance distribution in which the peripheral part of the image display device (particularly upper side edge, right and left edge parts), namely the periphery of the wall surface is brightened and the luminance is gradually lowered with increasing distance from the peripheral part of the image display device.

When the viewer views the picture displayed in the screen of the image display device, the way of looking (state of illumination environment such as luminance and luminance distribution) of the backside wall surface of the image display device is different, depending on the material, direction or angle of the backside wall surface of the image display device, or whether the wall surface is a flat surface or curved surface, or according to a distance between the image display device and the wall surface. However, by detecting the luminance of the reflection surface (wall surface), the viewer's desired illumination environment can be realized, even when the installation environment of the image display device is changed.

Further, by detecting the chromaticity of the reflection surface (wall surface), the illumination environment of the viewer's desired chromaticity and chromaticity distribution can be realized, even when the installation environment of the image display device is changed.

### (Eighth Embodiment)

In the aforementioned seventh embodiment, the luminance, etc, of the wall surface is detected by the light receiving parts 191 to 193 fixed to the illumination device 100. However, the present invention is not limited thereto, and the illumination environment of the periphery of the image display device can be adjusted in a circumstance closer to the viewpoint of the viewer, by acquiring the information of the illumination environment such as luminance, luminance distribution, and chromaticity of the wall surface of the periphery (backside) of the image display device by a remote controller operated at hand of the viewer.

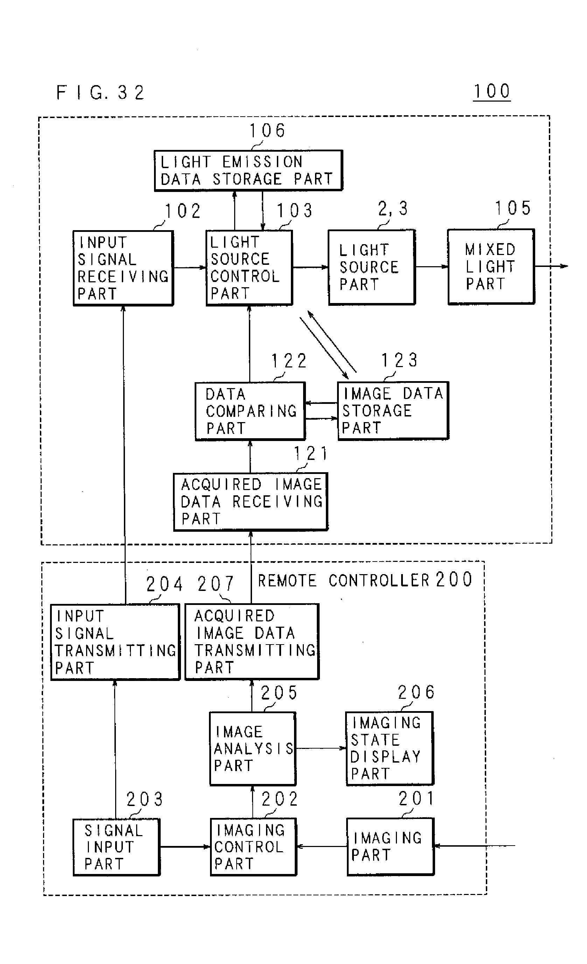

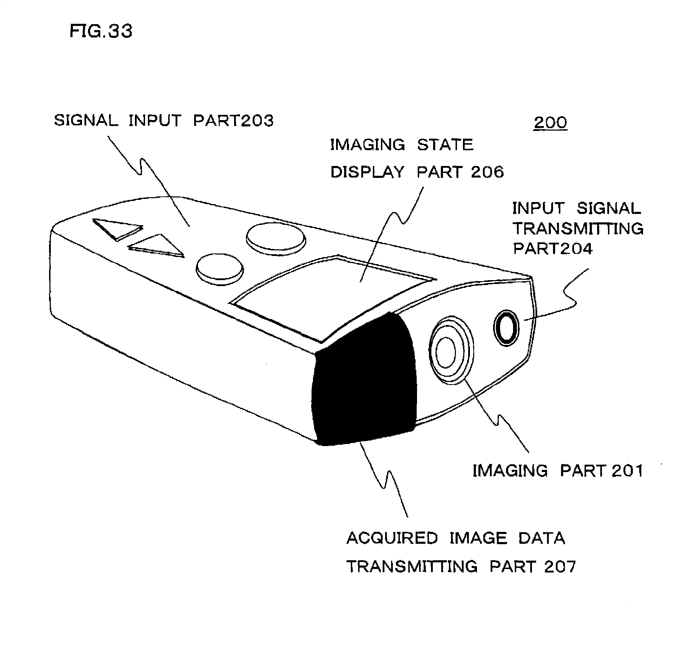

FIG. 32 is a block diagram showing the structure of the illumination device 100 according to an eighth embodiment, and FIG. 33 is an outer appearance view of a remote controller part 200. The illumination device 100 of the eighth embodiment is different from that of the seventh embodiment in that the illumination device 100 of the eighth embodiment includes an acquired image data receiving part 121, being an image acquisition part as an acquisition part of the information of the illumination environment; a data comparing part 122; an image data storage part 123; and a remote controller part 200. Note that the same reference numerals are assigned to the same parts as those of the seventh embodiment and the description thereof is omitted.

The remote controller part 200 includes: an imaging part 201; an imaging control part 202; a signal input part 203; an input signal transmitting part 204; an image analysis part 205; an imaging state display part 206; and an acquired image data transmitting part 207, and the like.

By operating the signal input part 203, the viewer can start imaging by the imaging part 201. Thus, the input signal transmitting part 204 transmits the image acquiring "on" signal to the input signal receiving part 102.

The imaging part 201 includes an optical system such as a lens and imaging elements such as a CCD or a CMOS, and converts the light in a visible light region to an electric signal, and outputs the converted electric signal to the imaging control part 202. Thus, by operating the remote controller 200 by the viewer, desired scenery can be imaged.

The imaging control part 202 confirms an image quality such as focus or exposure, and outputs an operation signal to the imaging part 201 as needed, and performs adjustment of the image quality of the picked-up image obtained by imaging. The imaging control part 202 outputs the picked up image to the image analysis part 205.

The image analysis part 205 performs edge detection by a pixel value of the picked-up image, and by using a technique of pattern matching to the edge image, specifies an image area corresponding to the image display device. The image analysis part 205 outputs the adjustment signal to the imaging control part 202, for adjusting an image angle according to the size of the specified image area. Thereafter, the image analysis part 205 determines whether or not an acquired image range R of a proper size can be acquired, according to the size of inside of the picked-up image of the specified image area, and can urge the viewer to operate the imaging state display part 206 to adjust a position or a direction of the remote controller part 200 as needed.

The imaging state display part 206 displays the picked-up image and an operation request to the viewer. The viewer can adjust the position or the direction of the remote controller part 200 so that the image display device is positioned at approximately the center of the picked-up image displayed in the imaging state display part 206.

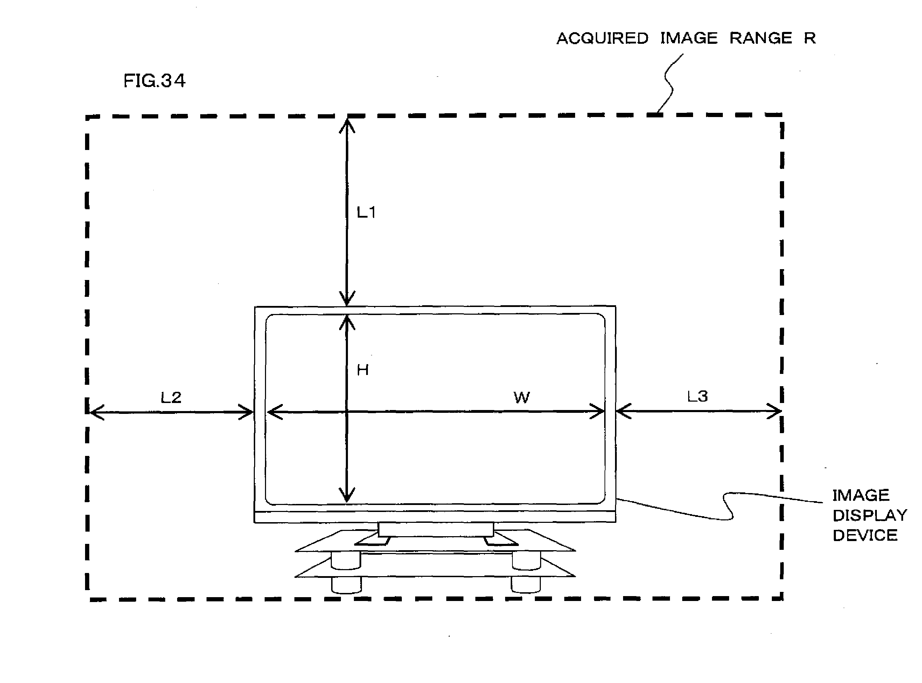

FIG. 34 is an explanatory view showing a determination example of the acquired image range. As shown in FIG. 34, longitudinal/lateral dimensions of the screen of the image display device is set to H, W respectively, and space dimensions of top, right, and left of the image display device within the acquired image range R are set to L1, L2, and L3, respectively. Whether or not the acquire image range R has a proper size can be determined as a proper size, for example, in a case of satisfying L1 ≥ H, L2 ≥ W/2, and L3 ≥ W/2.

When the image analysis part 205 determines that the acquired image range R has a proper size, the luminance, luminance distribution, chromaticity, and the like of the reflection surface (wall surface) at the backside of the image display device are calculated, based on the picked-up image remained after excluding the image area corresponding to the image display device from the picked-up image. The image analysis part 205 generates acquired image data J according to a calculation result, and outputs the generated acquired image data J to the acquired image data transmitting part 207.

The acquired image data transmitting part 207 transmits the acquired image data J to the acquired image data receiving part 121.

The acquired image data receiving part 121 outputs the received acquired image data J to the data comparing part 122.

The data comparing part 122 acquires image data K, being a target previously stored in the image data storage part 123, and compares the acquired image data J and the image data K. The data comparing part 122 outputs the comparison result to the light source control part 103. Here, the image data K, being the target, can be the data for expressing the illumination environment in the wall surface, in a case of installing the image display device at a predetermined position in front of the wall surface, which is an ideal place. Note that the data compared by the data comparing part 122 includes, for example, the luminance, luminance distribution, chromaticity, and the like

The light source control part 103 increases/decreases the light quantity of the light source parts 2, 3, according to the inputted comparison result, or adjusts the chromaticity. In other words, the light source control part 103 controls the light quantity of the light source parts 2, 3, light emission ratio (ratio of R, G, B), chromaticity, and the like, so that the detected luminance, chromaticity, and the like, reach a predetermined value (target value).

The light control part 103 adjusts the luminance and/or chromaticity of the light source parts 2, 3, according to the inputted comparison result. In other words, the light source control part 103 controls the light quantity of the light source parts 2, 3, and the chromaticity and the like of each color of R, G, B, so that the detected luminance, the chromaticity, and, reach a predetermined value (target value).

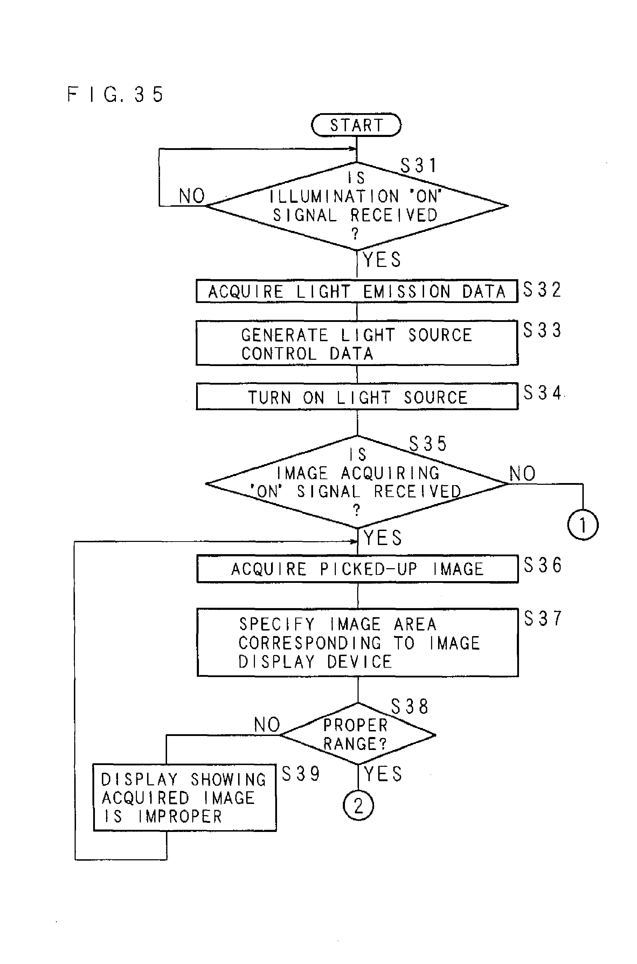

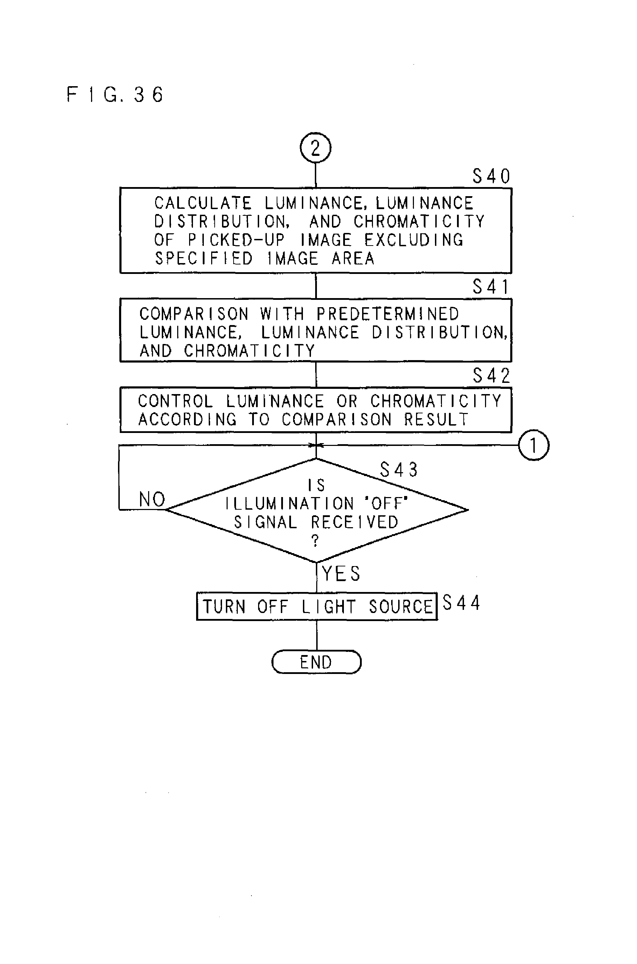

FIGS. 35 and 36 are explanatory views showing the processing procedure of the illumination device 100 according to the eighth embodiment. The light source control part 103 determines whether or not the illumination "on" signal is received (S31), and when the illumination "on" signal is not received (NO in S31), the processing of step S31 is continued.

When the illumination "on" signal is received (YES in S31), the light source control part 103 acquires the light emission data (S32), and generates light source control data according to the acquired light emission data (S33), and turns-on the light source (S34).

The light source control part 103 determines whether or not the image acquiring "on" signal is received (S35), and when the image acquiring "on" signal is received (YES in S35), acquires the picked-up image (S36), and specifies the image area corresponding to the image display device by the acquired picked-up image (S37).

The light source control part 103 determines whether or not the acquired image range R is a proper range (S38), and when the acquired image range R is not the proper range (NO in S38), displays a message that the acquired image is improper (S39), and performs the processing after step S36. When the acquired image range R is a proper range (YES in S38), the light source control part 103 calculates the luminance, luminance distribution, and chromaticity in the picked-up image from which the specified image area is excluded (S40).

The light source control part 103 compares the calculated result, and predetermined luminance, luminance distribution, and chromaticity (S41), and controls the luminance, chromaticity or the like of the light source parts 2, 3 according to comparison result (S42). The light source control part 103 determines whether or not the illumination "off" signal is received (S43). Meanwhile, when the image acquiring "on" signal is not received (NO in S35), the light source control part 103 performs the processing of step S43.

When the illumination "off" signal is not received (NO in S43), the light source control part 103 continues to perform processing of step S43, and when the illumination "off" signal is received (YES in S43), turns-off the light source (S44), and ends the processing.

As describe above, in the eighth embodiment, when the viewer views the picture on the screen of the image display device, the luminance, luminance distribution, chromaticity, and the like of the entire reflection surface (such as wall surface) in a visual field of the viewer, can be detected. Therefore, the information of a wider area than the detection part as described in the first embodiment can be obtained, and therefore the illumination environment corresponding to the environment in which the illumination device is installed, can be further surely realized. Further, by preventing the light from the image display device and particularly preventing an influence by the picture on the screen, the luminance, luminance distribution, chromaticity, and the like of the entire reflection surface (such as wall surface) in the visual field of the viewer can be further accurately detected.

In the eighth embodiment, the acquired image data J and the image data K are compared. Therefore, the acquired image data J transmitted to a body side of the illumination device 100 from the remote controller 200 is preferably static image data including RGB values for every pixel of the picked-up image. Further, in a case of picture data including the aforementioned data that can be transmitted in real time, further detailed illumination environment can be controlled, and this is ideal.

As a transmission system of the acquired image data, a general wireless communication system can be used. For example, distance of remote controller operation is within 10 meters in many cases. Therefore, a system used in a so-called wireless PAN (Personal Area Network) is appropriate as the wireless communication system. For example, a wireless LAN system represented by IEEE802, 11b, g, Bluetooth, ZigBee, UWB, and the like can be used.

Further, one direction from the remote controller 200 to the body side of the illumination device 100 is sufficient as a transmitting direction of the acquired image data. Therefore, if an infrared ray communication can be utilized, which is used in transmitting data by normal remote control operation, there is no necessity for adding a function of transmitting the image data, and there is no necessity for increasing the dimension of the remote controller part, thus making it possible to reduce power consumption. In this case, data quantity of the transmitted image data is preferably reduced. A method of reducing the transmitted data quantity will be described below.

The image display device is generally placed on a floor or on a placement table in many cases, and in this case, an important luminance distribution in the periphery of the image display device for the viewer is an expansion of the peripheral edge of the image display device, to right and left and to an upper part. Therefore, a coordinate system of the periphery of the image display device is considered.

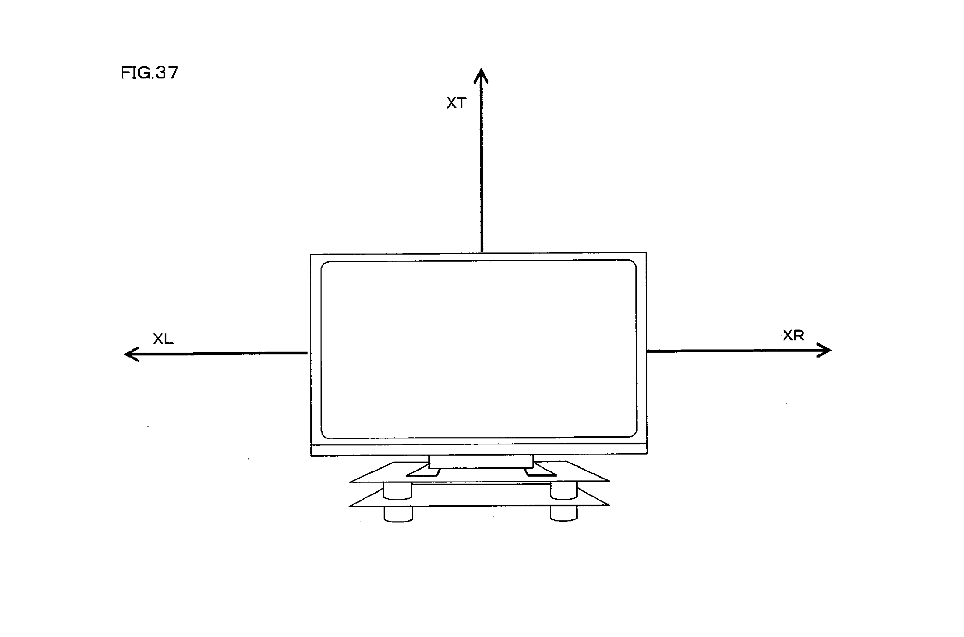

FIG. 37 is an explanatory view showing an example of the coordinate system of the periphery of the image display device. As shown in FIG. 37, the coordinate system (XR, XL, XT) crossing at the center of the image display device is defined. Each coordinate axis is defined in a vertical direction from the center of three sides on the display surface of the image display device.

The image data obtained by picking-up the image by the imaging part 201, can be expressed by at least a tristimulus value of RGB, for every pixel decided by a resolution of an imaging element such as CCD. When this tristimulus value is used, such data can be used as it is. However, for example, when the illumination environment is expressed by brightness data for every pixel, lightness Y is calculated by formula Y = 1.0000R + 4.5907G + 0.00601B based on a standard color-matching function defined by Commission Internationale de l'Eclairage (CIE), to thereby obtain luminous quantities of the lightness in consideration of a standard ratio luminosity factor.

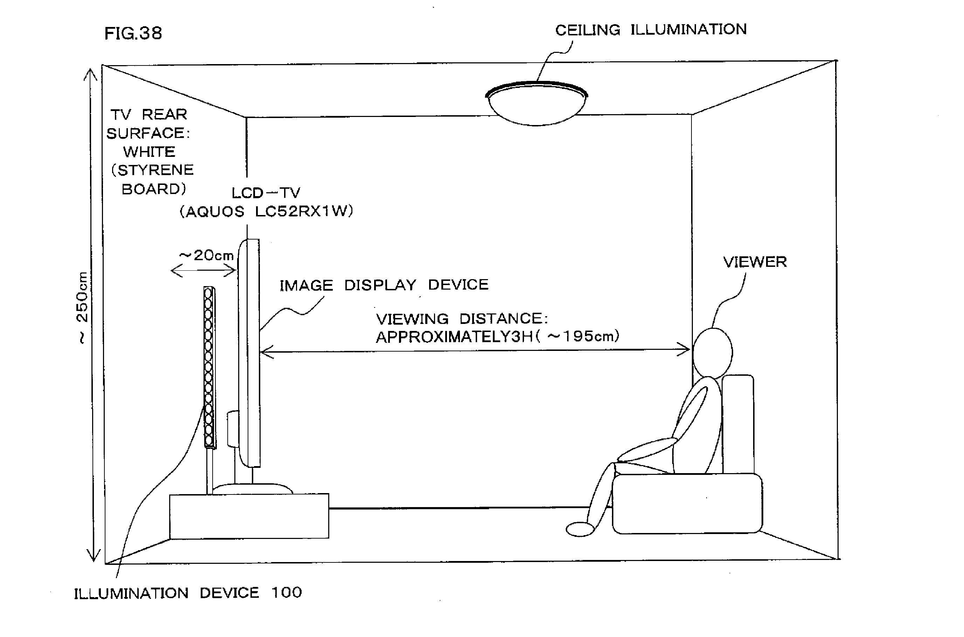

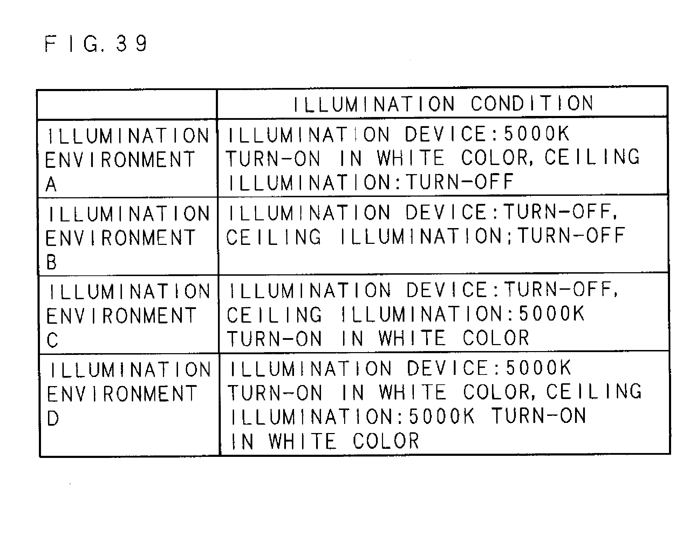

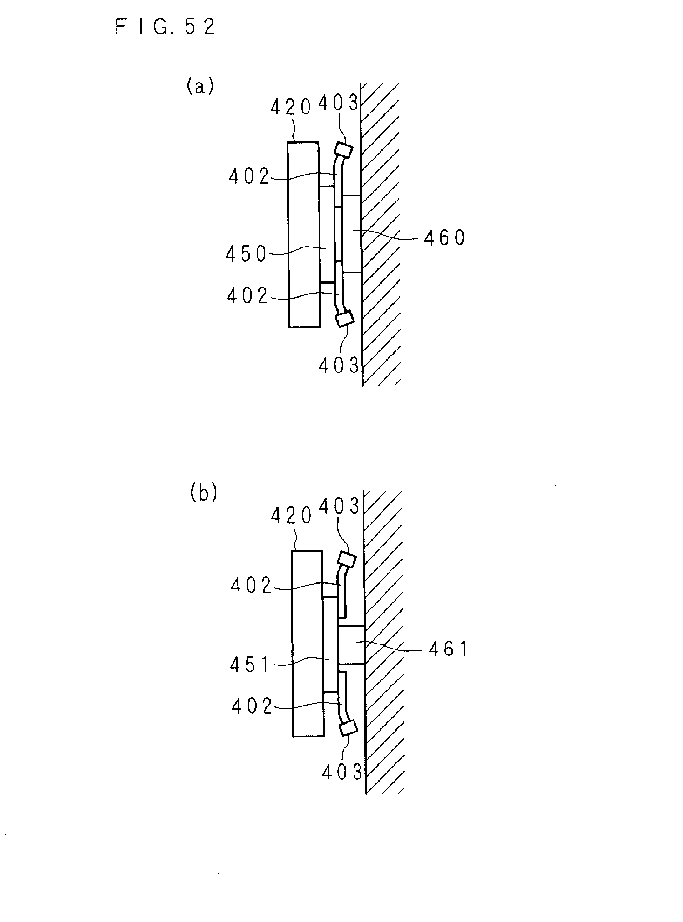

FIG. 38 is a schematic view showing an example of an experiment environment for measuring the illumination environment of the periphery of the image display device, and FIG. 39 is an explanatory view showing an example of the illumination environment. As shown in FIG. 38, 52-type liquid crystal television is used as the image display device, and different illumination environments of four kinds A to D as shown in FIG. 39 are set. For example, illumination environment A is a state in which the illumination device 100 is turned-on in white color at color temperature of 5000K, and ceiling illumination is set in a state of being turned-off. In the following, illumination environments B to D are similarly set as shown in FIG. 39. The brightness of the ceiling illumination is 300 Lux just under an instrument.

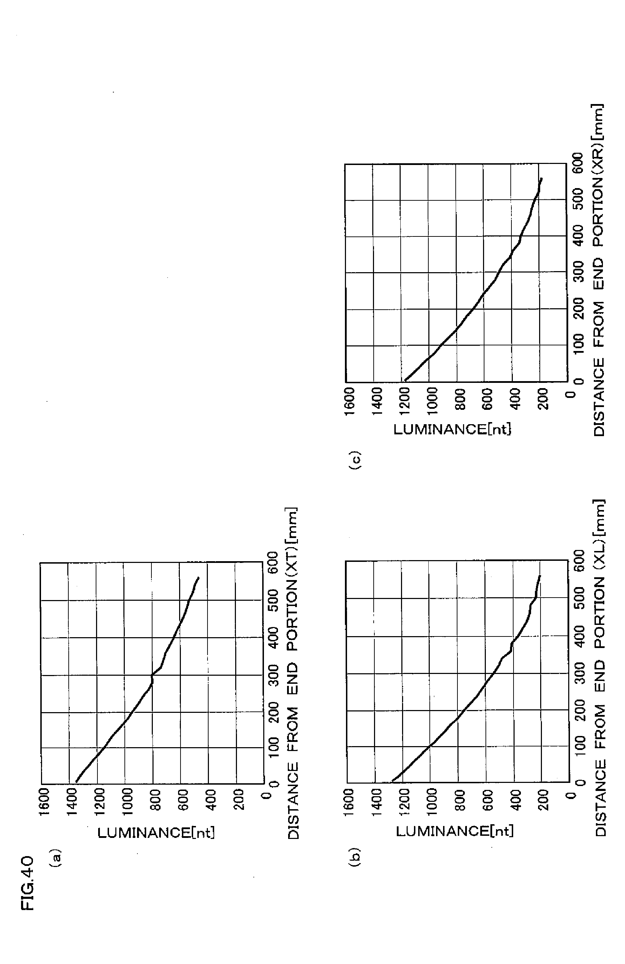

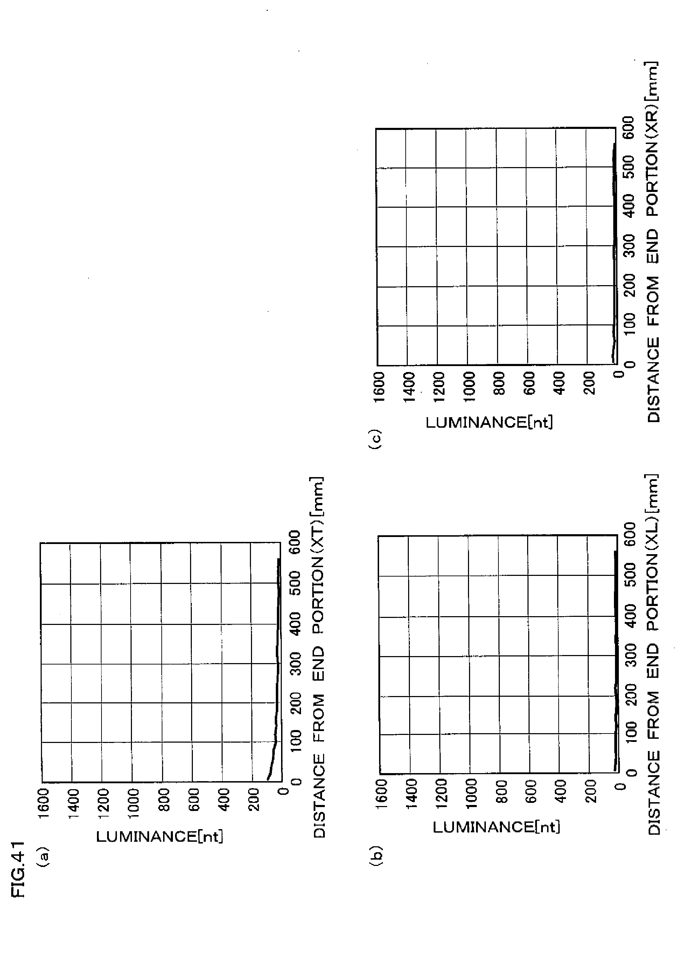

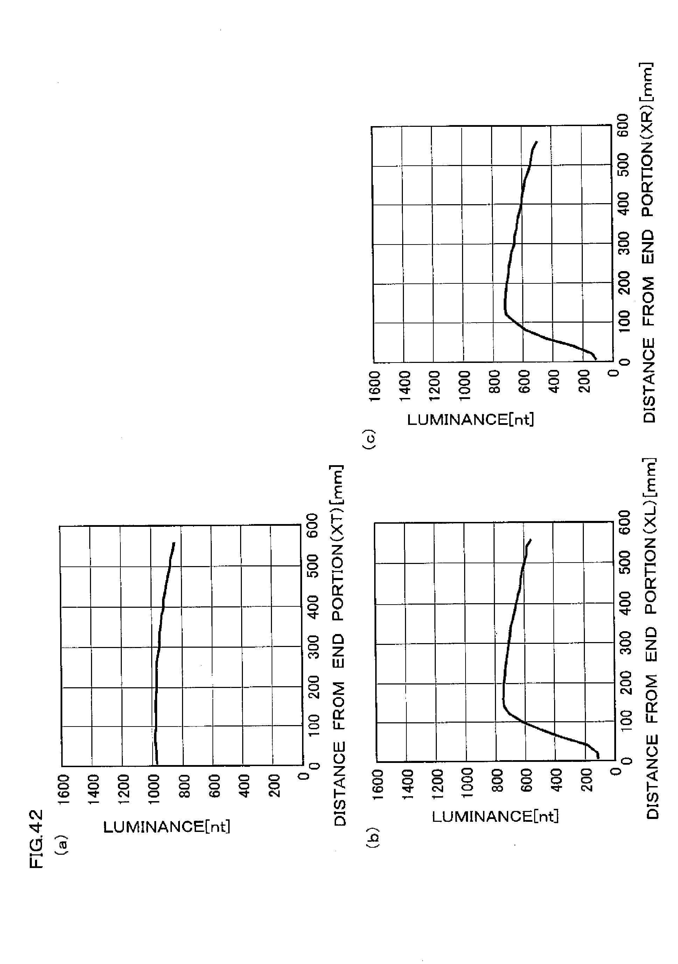

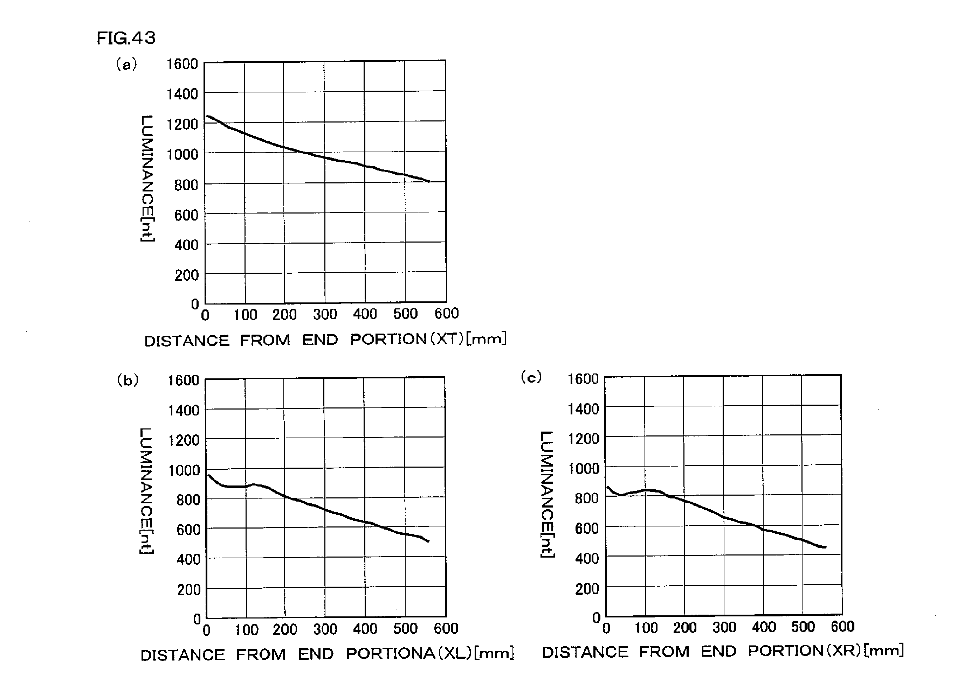

FIGS. 40, 41, 42, and 43 are explanatory views showing the luminance distribution of the wall surface at the backside of the image display device. FIG. 40 shows the luminance distribution in a case of the illumination environment A, FIG. 41 shows the luminance distribution in a case of the illumination environment B, FIG. 42 shows the luminance distribution in a case of the illumination environment C, and FIG. 43 shows the luminance distribution in a case of the illumination environment D. As shown in FIGS. 40 to 43, it is found that the luminance distribution has different characteristics, according to the illumination environments A to D. An example of extracting such characteristics will be described below.

As characteristic amounts showing the characteristic of the luminance distribution, short or long distance from the edge of the image display device, namely, the ratio of an average luminance I1 of an area far from the image display device, to an average luminance I2 of an area close to the image display device, and a differential value of the luminance (differential average value of the luminance) for distance, are considered. In the area far from the image display device, for example, distance from the edge of the image display device is 400 to 500 mm (3 to 3.8 at a ratio of a diagonal length of the screen of the image display device), and in the area close to the image display device, for example, the distance from the edge of the image display device is 0 to 100 mm (0 to 0.8 at the ratio of a diagonal length of the screen of the image display device).

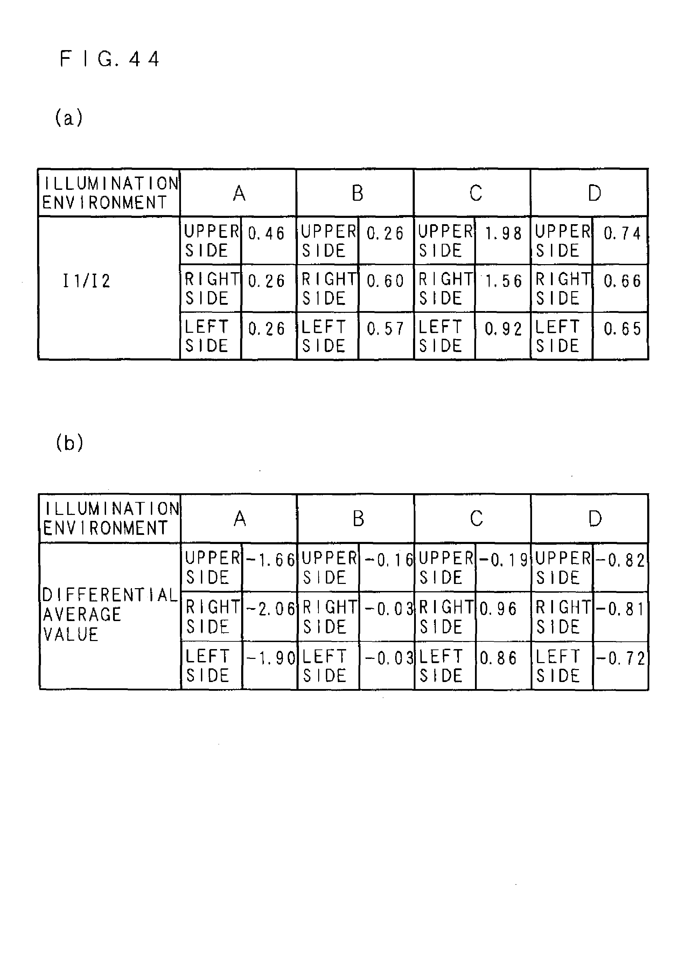

FIG. 44 is an explanatory view showing a calculation result of the characteristic amount. FIG. 44(a) shows the ratio of the average luminance I1 of the area far from the image display device in each of the illumination environments A to D, to the average luminance I2 of the area close to the image display device, and FIG. 44(b) shows the differential average value of the luminance.

In order to view the picture displayed in the screen of the image display device by the viewer with high realistic sensation, the illumination environment A is the most suitable illumination environment, wherein the periphery of the image display device is illuminated by the illumination device 100 and the ceiling illumination is turned-off. Accordingly, as shown in FIG. 44(a), when the ratio I1/I2 of the average luminance I1 of the area far from the image display device, to the average luminance I2 of the area close to the image display device satisfies, for example, I1/I2 < 0.5, the illumination environment A can be distinguished from other illumination environments B to D, and it can be said that excellent illumination environment for the viewer can be realized.

Further, as shown in FIG. 44(b), when the differential average value of the luminance is, for example, a negative value and an absolute value of the differential average value is 1(nt/mm) or more, the illumination environment A can be distinguished from other illumination environments B to D, and it can be said that excellent illumination environment for the viewer can be realized.

Instead of transmitting the entire image data obtained by picking-up the image by the imaging part 201, only the aforementioned characteristic amount is transmitted to the body of the illumination device 100, to thereby realize an optimal illumination environment only by a normal communication function such as an infrared ray communication provided to the remote controller.

According to the aforementioned seventh or eighth embodiment, the illumination device 100 includes the light source for illuminating the periphery of the equipment such as the image display device, then acquires the information regarding the illumination environment such as luminance, luminance distribution, or chromaticity in the periphery of the equipment, and controls the luminance and/or the chromaticity of the light source according to the information regarding the acquired illumination environment, to thereby obtain a desired illumination environment. The information regarding the illumination environment may be directly detected by a sensor, etc, or may be calculated based on the detected data. In addition, the acquisition part may be installed in the illumination device body or may be installed on the rear surface of the equipment such as the image display device. In the illumination device, for example, when the luminance is lower than a predetermined value in the acquired information regarding the illumination environment, the light quantity of the light source is increased to obtain a high luminance in the periphery of the equipment. Further, when the chromaticity is lower than a predetermined value in the acquired information regarding the illumination environment, the chromaticity of the light source is increased to obtain a high chromaticity in the periphery of the equipment. Thus, a desired illumination environment can be realized, irrespective of a peripheral state of the equipment.

Further, in a case of installing the equipment such as the image display device indoors, when the viewer views the picture displayed in the screen of the equipment according to the material, direction, or angle of the wall at the backside of the equipment, or the distance between the equipment and the wall surface, the way of looking (such as luminance and luminance distribution state) of the wall surface at the backside of the equipment is different. In the present invention, by acquiring the information regarding the illumination environment, a viewer's desired illumination environment can be realized, even when the installation environment of the equipment is changed.

Further, according to the aforementioned seventh or eighth embodiment, when the light emitted from the light source is reflected by the reflection surface, the illumination device 100 detects the luminance of the reflection surface by the detection part. The detection part may be installed in the illumination device body or may be installed on the rear surface of the equipment such as the image display device. The luminance and the threshold value detected by the detection part are compared, and the light quantity of the light source is controlled according to the comparison result. For example, when the detected luminance is lower than a threshold value, the light quantity of the light source is increased to obtain a high luminance of the reflection surface. Also, when the detected luminance is higher than the threshold value, the light quantity of the light source is reduced to obtain a low luminance of the reflection surface. By detecting the luminance of the reflection surface, a desired illumination environment can be realized, irrespective of the state of the reflection surface.

Further, in a case of installing the equipment such as the image display device indoors, when the viewer views the picture displayed in the screen of the equipment according to the material, direction, or angle of the wall at the backside of the equipment, or the distance between the equipment and the wall surface, the way of looking (such as luminance and luminance distribution state) of the wall surface at the backside of the equipment is different. In the present invention, by detecting the luminance of the reflection surface, a viewer's desired illumination environment can be realized, even when the installation environment of the equipment is changed.

Further, according to the aforementioned seventh or eighth embodiment, the illumination device 100 receives the reflected light from the periphery of the equipment such as the image display device, by the receiving part. The receiving part is, for example, a sensor capable of detecting the light. Thus, the information regarding the illumination environment such as the luminance, luminance distribution or chromaticity, in the periphery of the equipment can be acquired.

Further, according to the aforementioned seventh or eighth embodiment, when the reflected light from the periphery of the equipment (reflected light from the reflection surface) is received by the receiving part, the direction of the incident light to the light receiving part is regulated by a regulation part. For example, the directivity of the light receiving part is regulated, so that the incident angle incident on the light receiving part is approximately 0 degree, namely, so as to receive only the light incident on the light receiving surface of the light receiving part approximately vertically. As the regulation part, for example, a member having a slit or a pinhole, or a polarized filter can be used. Then, the light receiving part is provided, so that the direction of the directivity of the light receiving part coincides or is approximated with/to a direction in which the viewer views equipment such as the image display device. Thus, out of the light from the reflection surface (such as wall surface) at the backside of the equipment such as the image display device, the light that can be caught by the viewer's eye level can be detected when the picture in the screen of the equipment such as the image display device is viewed by the viewer, thus making it possible to accurately acquire the luminance, chromaticity or the like of the wall surface that can be recognized by the viewer's eye level.

Further, according to the aforementioned seventh or eighth embodiment, a plurality of light receiving parts are disposed separately from each other by a suitable length. Thus, the information regarding the illumination environment such as the luminance, luminance distribution, or chromaticity in different areas of the periphery of the equipment (different areas on the reflection surface) can be acquired.

Further, according to the aforementioned seventh or eighth embodiment, the reflected light from the periphery in the vicinity of the peripheral part of the equipment such as the image display device is detected. For example, when the illumination device is installed at the backside (rear side) of the equipment such as the image display device, the light receiving part is provided to a position close to the edge of the right and left of the equipment such as the image display device. Further, the light receiving part can also be provided at a position close to approximately the center of the upper side edge of the equipment such as the image display device. When the viewer views the picture in the screen of the equipment such as the image display device, the viewer catches the light from the backside reflection surface (such as the wall surface) not blocked by the equipment such as the image display device. Therefore, by providing the light receiving part in the vicinity of the edge of the equipment such as the image display device, the reflected light that can be recognized by the viewer can be accurately detected as much as possible.

Further, according to the aforementioned seventh or eighth embodiment, the light receiving part functions as a color sensor. As the color sensor, for example, a photo sensor of R (red), G (green), B (blue) can be used. The chromaticity detected by the light receiving part and a predetermined value are compared, and according to the comparison result, the chromaticity of the light source is controlled. The predetermined value may be a previously set value, or may be set according to a taste of the viewer. Thus, even when the installation environment of the equipment such as the image display device is changed, the illumination environment of viewer's desired coloring can be realized.

Further, according to the aforementioned seventh or eighth embodiment, the acquisition part is an image acquisition part for acquiring the image of the periphery of the equipment such as the image display device, and from the acquired image, the information regarding the illumination environment such as the luminance, luminance distribution, and chromaticity is calculated. The image acquisition part acquires the image of the periphery (for example, the backside wall surface) including the equipment such as the image display device. The illumination environment such as the luminance, luminance distribution, and chromaticity is calculated, based on the acquired image. Thus, when the viewer views the picture in the screen of the equipment such as the image display device, the luminance, luminance distribution, chromaticity and the like of the entire reflection surface (such as the wall surface) in the visual field of the viewer can be accurately detected.

Further, according to the aforementioned seventh or eighth embodiment, the image acquisition part is provided to a remote control terminal (such as the remote controller). Thus, the viewer can pick-up the image in a desired area (such as the backside wall surface) of the periphery of the equipment such as the image display device by using the image acquisition part provided to a remote control terminal (such as the remote controller), so that the illumination environment of the desired area can be an environment according to the taste of the viewer. Moreover, the illumination environment can be further accurately realized.

Further, according to the aforementioned seventh or eighth embodiment, the equipment is the image display device. Thus, a desired illumination environment can be realized, irrespective of the state of the periphery of the image display device.

As described above, according to the aforementioned seventh or eighth embodiment, by detecting the luminance of the reflection surface, a viewer's desired illumination environment can be realized, even when the installation environment of the image display device is changed. Further, the illumination environment of a viewer's desired chromaticity distribution can be realized. In addition, out of the light from the reflection surface (such as wall surface) at the backside of the image display device, the light that can be caught by a viewer's eye level can be detected when the picture in the screen of the image display device is viewed by the viewer, thus making it possible to accurately acquire the luminance, chromaticity or the like of the wall surface that can be recognized by the viewer's eye level.

According to the aforementioned seventh or eighth embodiment, the luminance or the chromaticity of the wall surface is detected. Also, the light from the light source part is directly received, and the luminance or the chromaticity is detected. In addition, both of the luminance and the chromaticity can be compared. Thus, difference in reflectance due to the shape and the material of the wall surface can be detected, thus making it possible to control a desired illumination environment further accurately. Note that the luminance and the chromaticity can be detected together.

### (Ninth Embodiment)

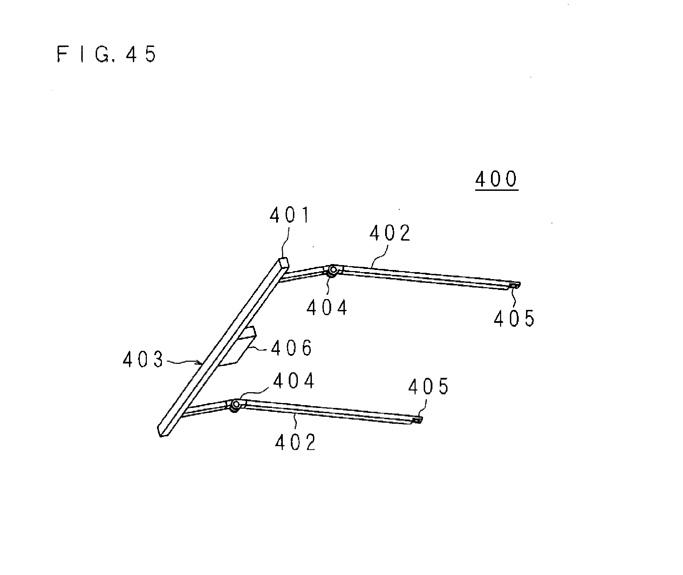

FIG. 45 is an outer appearance perspective view of an illumination unit 400 configuring the illumination device according to a ninth embodiment. In the figure, 401 indicates a frame, being an illumination part. The frame 401 is a housing part for housing the light source, and for example, is a box made of aluminum with one surface opened, wherein the light source (not shown) is housed and a transparent or semi-transparent diffusion plate 403 made of synthetic resin for properly diffusing the light emitted from the light source, is provided on the opened one surface.

The light source is a plurality of LED modules (not shown) which are linearly surface mounted on a rectangular substrate. The LED modules are the surface mount type package LEDs on which LED elements of three colors of red (R) LED element, blue (b) LED element, and green (G) LED element are packaged. The light emission intensity of each LED element of RGB can be controlled, and by adjusting the light emission intensity (luminance) of the LED element of each color, irradiation of multiple colors is achieved by the LED. Thus, the periphery (such as a backside wall) of the display device, being an example of an illumination target, can be illuminated by a user's favorite color.

The illumination target here does not mean a target directly illuminated by the illumination device including the illumination unit 400 or a plurality of illumination units 400, but means a target whose periphery is illuminated by the illumination unit 400 or the illumination device. Further, the illumination target is not limited to the display device, and other equipment may also be acceptable.

Further, each LED module is not a package LED including LED elements of RGB, but is an LED chip of each color of RGB, and may have a structure in which LED chips of each color of RGB are arranged in the light source part. The light source is not limited to the LED module, and other light source such as the fluorescent lamp or the cold cathode tube may also be used. However, the LED module has a high directivity, and therefore the wall of the periphery of the display device can be efficiently irradiated, and control in an irradiating direction is also easy. In a case of using the light source with not so high directivity as that of the fluorescent lamp emitting light in all directions, a reflection member is preferably provided for reflecting the light emitted to inside of the frame 401.

One end of an arm 402, being a support part, is fixed to both end sides of the frame 401. The arm 402 is formed into a rod-like body made of synthetic resin. An attachment hole 405 is provided to the other end of the arm 402, which is an attachment part for attaching the illumination unit 400 to a hooking member as will be described later. In addition, the periphery of the attachment hole 405 of the arm 402 has a thickness (width) of about half, so that two arms 402 can be attached in such a manner as being overlapped on each other.

A hinge 404, being a setting member for setting the direction of the light source, is provided in a middle part of the arm 402. By curving the hinge 404, the arm 402 can be bent, thus making it possible to change the direction of the light source, namely, the direction of a plate surface of the diffusion plate 403. Note that instead of providing the hinge 404, the arm 402 can also be formed by being curved in the middle part of the arm 402. Also, instead of the hinge 404, for example, a member for making the frame 401 movable with an end portion of the arm 402 as a fulcrum, can also be used. By setting the direction of the light source, a desired range of the wall at the backside of the display device can be brightened, irrespective of a dimension of the display device and an attachment space from the wall of the display device, even when the periphery of a wall-hooking type display device is illuminated.

An electric power part 406 is provided in the frame 401, with a constant current circuit incorporated therein, for controlling current supplied to the LED module for turning-on the LED module of the light source in a predetermined brightness and coloring.

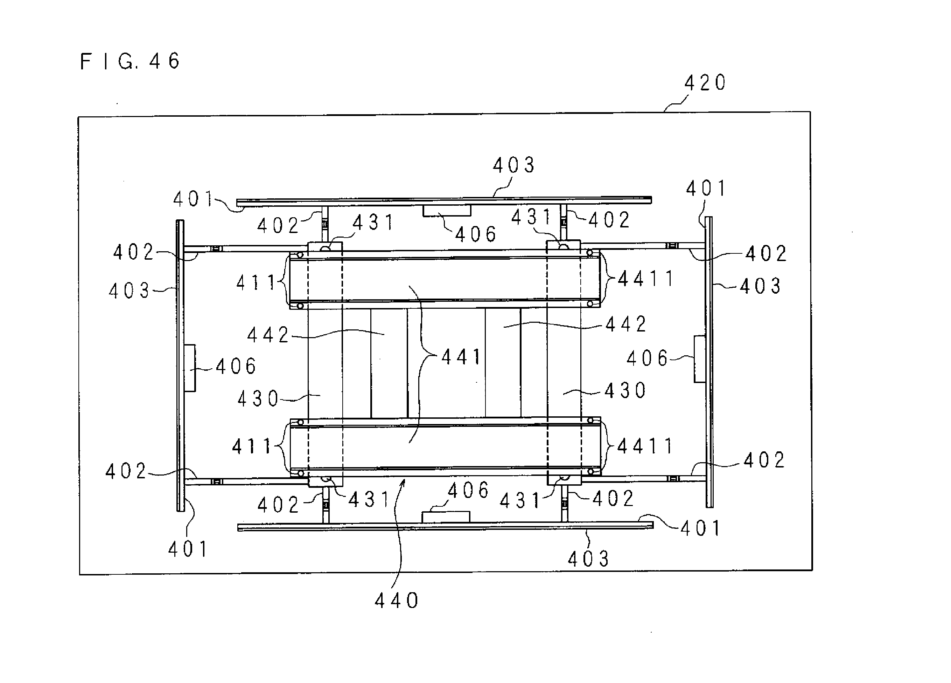

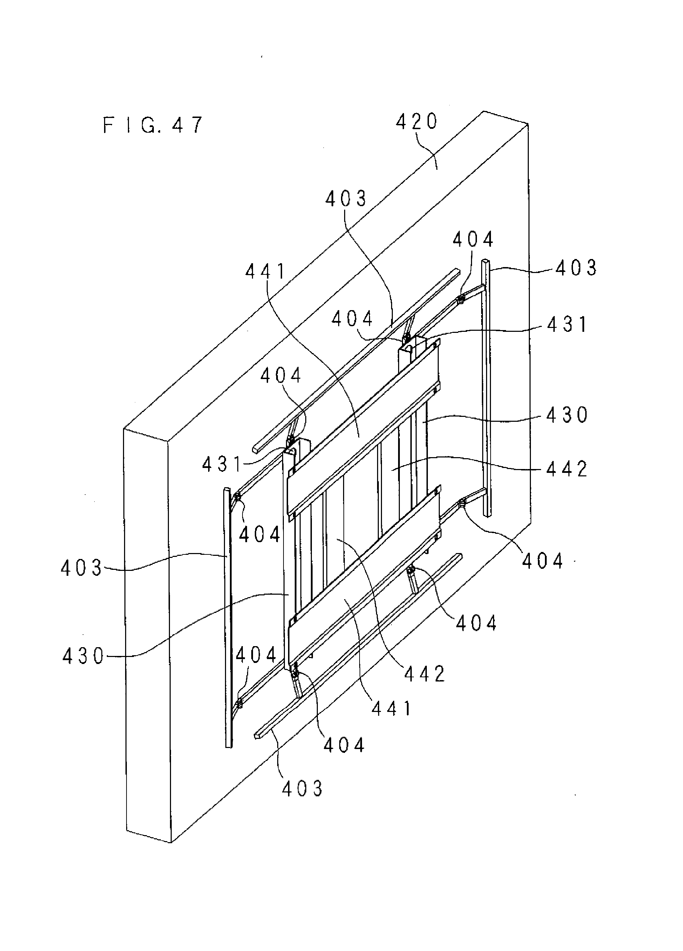

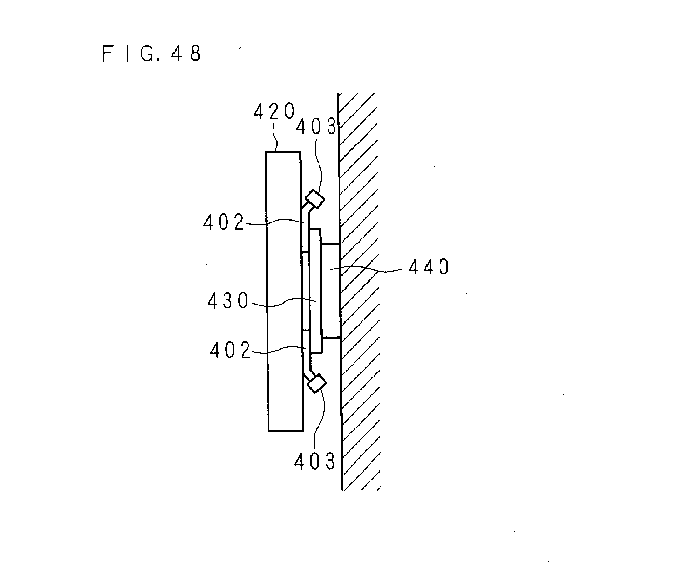

FIG. 46 is a front view showing an example of an attachment structure of the illumination unit 400, FIG. 47 is a perspective view showing an example of the attachment structure of the illumination unit 400, and FIG. 48 is a side view showing an example of the attachment structure of the illumination unit 400. When a display device 420 is attached to a wall, the illumination unit 400 is attached so as to be disposed between a rear surface of the display device 420 and the wall surface. FIGS. 46 and 47 show examples of a state of the rear surface of the display device 420 (having a display screen in a front side). Further, FIGS. 46 and 47 show examples of disposing four illumination units 400 in the vicinity of upper/lower and right/left edge portions of the rear surface of the display device 420. In FIGS. 46 and 47, the illumination unit 400 is used, which is disposed in the vicinity of the upper and lower side edge portions of the display device 420 with its light source having a longer length (length of frame 1) than the illumination unit disposed in the vicinity of the right and left edge portions. However, the present invention is not limited thereto. In FIG. 48, the illumination unit 400 disposed in the vicinity of the right and left edge portions of the display device 420 respectively, is omitted.

The hooking member for attaching the display device 420 to the wall has a device side wall hooking member 430 and a wall side wall hooking member 440. The device side wall hooking member 430, with its sectional face formed into approximately U-shape turned sideways, is a plate having a suitable length. Note that the sectional shape is not limited to the approximately U-shape turned sideways. Attachment holes 431 are formed on both ends of the device side wall hooking member 430, for attaching the device side wall hooking member 430 to the rear surface of the display device 420 by screws (not shown). The dimension of each attachment hole 431 is set to the same dimension as the attachment hole 405 of the arm 402 of the illumination unit 400. The device side wall hooking members 430, 430 are attached to the rear surface of the display device 420 separately from each other by a suitable length, by screwing the screws through the attachment holes 431.

When the device side wall hooking member 430 is attached to the display device 420, the illumination unit 400 can be attached by fitting the attachment hole 405 of the illumination unit 400 into the attachment hole 431 of the device side wall hooking member 430 and fastening the screw (not shown). There is no necessity for providing a new member for attaching the illumination unit 400. Therefore, when the display device 420 is attached to the wall, or even in a state that the display device 420 is already attached to the wall, the illumination unit 400 can be easily attached.

The wall side hooking member 440 has lateral members 441, 441, having plate shapes and suitable lengths, and two vertical members 442, 442 having plate shapes and suitable lengths, with the lateral members 441, 441, and vertical members 442, 442 assembled in a well-curb shape. Both edge portions along a longitudinal direction of the lateral member 441 have a sectional face approximately in L-shape, thereby forming a contact face in contact with the wall surface. Attachment holes 4411 are formed at four corners of the lateral member 441, for attaching the wall side wall hooking member 440, and the wall side wall hooking member 440 can be fixed to the wall by fastening the screws (not shown) through the attachment holes 4411.

In order to attach the display device 420 and the illumination unit 400 to the wall, first, the wall side wall hooking member 440 is fixed to a predetermined position of the wall. Then, the display device 420, with the device side wall hooking member 430 and the illumination unit 400 attached thereto, is approached to the wall side wall hooking member 440, to thereby fix the device side wall hooking member 430 and the wall side wall hooking member 440 by a fixing member (not shown).

The fixing member for fixing the device side wall hooking member 430 to the wall side hooking member 440 may have any shape or mode. For example, a rod-shaped fitting and an insertion hole for inserting the rod-shaped fitting may also be used, or a hook-shaped member and an locking hole or groove for locking the hook-shaped member may also be used, or a clip with a sectional face having a U-shaped clearance and a plate-like member engaging with the clearance of the clip may also be used as the fixing member.

As described above, the illumination unit 400 can also be attached, when the device side wall hooking member 430 is attached to the display device 420. Therefore, for example, a double stick tape, etc, used for fixing an illumination tool to the body of the display device is not needed, and therefore generation of dirt or scratch of the display device body can be prevented. Further, the frame 401, with the light source housed therein, is separated from the rear surface of the display device 420, thus preventing the light source of the illumination unit 400 from being brought into contact with the rear surface of the display device 420. Therefore, thermal interference of the display device 420 and the illumination unit 400 can be prevented, thus improving heat radiation efficiency.

Further, the wall surface of the periphery of the display device 420 can be illuminated in a state that the illumination unit 400 is attached, and therefore an indirect illumination environment for a wall hooking type display device can be provided to the viewer. Further, by adjusting the hinge 404, the direction of the diffusion plate 403 can be changed to a desired direction. Therefore, when the periphery of the wall hooking type display device is illuminated, a desired range of the wall surface at the backside of the display device can be brightened, irrespective of dimension of the display device and an installation space of the display device from the wall surface.

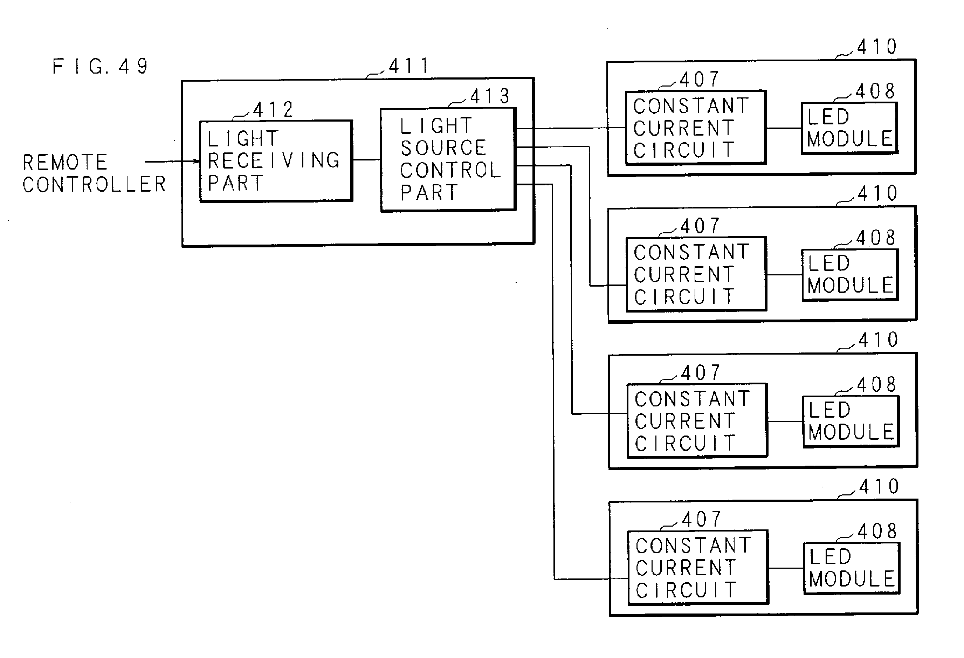

FIG. 49 is a block diagram showing an example of the structure of the illumination unit 400. In FIG. 49, four illumination units 400 are provided. However, the number of the illumination units 400 is not limited to four, and may be any one of one to three. Moreover, it may be five or more. As shown in FIG. 49, each illumination unit 400 includes a constant current circuit 407 and an LED module 408, etc, and is connected to a control unit 411.

The control unit 411 is disposed, for example, on an upper surface of the display device 420, including a light receiving part 412 and a light source control part 413, etc. The light receiving part 412 receives an input signal transmitted from the remote controller, according to an operation by the viewer. The input signal includes, for example, an illumination on/off signal for turning on/off the illumination of the illumination unit 400, and an illumination control signal for controlling the luminance, luminance distribution, chromaticity, and the like of the illumination of the illumination unit 400.

The light source control part 413 includes a conversion circuit (not shown) for converting AC voltage (AC 100V) to a predetermined DC voltage, and a control circuit (not shown) for controlling the constant current circuit 407 in each illumination unit 400. When the illumination "on" signal is included in the input signal, the light source control part 413 generates light source control data according to the acquired illumination control signal, and outputs the generated light source control data to the constant current circuit 407. The light source control data includes, for example, the duty ratio, etc, for modulating the pulse width to decide a current value flown through the LED module 408 and the timing of flowing the current.

When the light source is the surface mount type package LED on which the LED elements of three colors of red (R) LED element, blue (B) LED element, and green (G) LED element are mounted, the chromaticity can be controlled by controlling the luminance for every LED element of each color of RGB.

Further, when the light source control part 413 has a structure of attaching a plurality of illumination units 400 thereto, the light quantity of the light source of each illumination unit 400 is set according to an attachment position of each illumination unit 400. For example, when four illumination units 400 of the same rating or size are attached in the vicinity of the edge of four sides of the display device 420, the light quantity is set so that the light quantity of the light source of the illumination unit 400 disposed in the vicinity of an upper side edge portion and a lower side edge portion of the display device 420, is greater than the light quantity of the light source of the illumination unit 400 disposed in the vicinity of a right and left edge portions. Thus, even when the brightness of the periphery of the display device 420 is changed in the periphery of upper/lower and right/left portions of the display device 420, there is no necessity for attaching the illumination unit with different light quantity or size, and therefore a common illumination unit can be used.

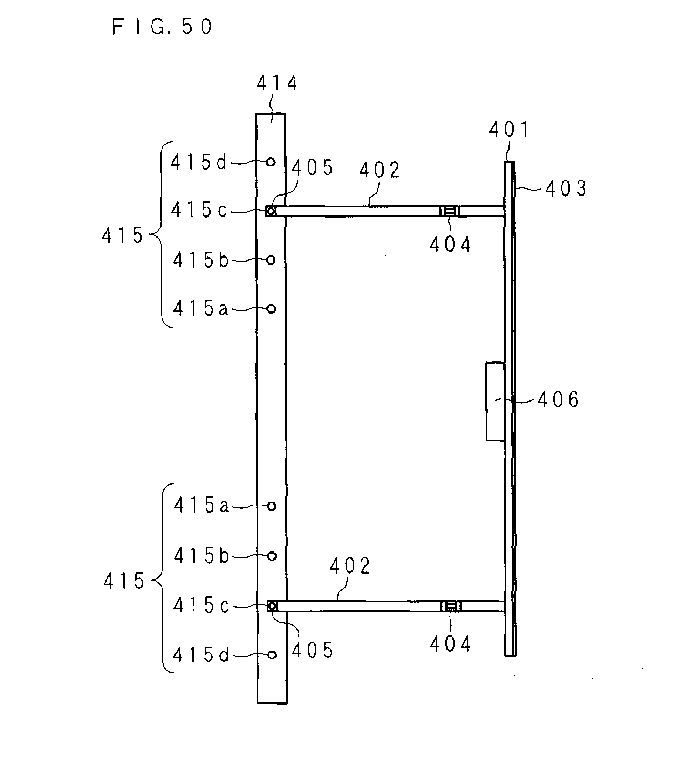

FIG. 50 is a plan view showing an example of an adjustment member 414 for adjusting an adjustment space of the illumination unit 400. In a case of fixing the illumination unit 400 to the device side wall hooking member 430, when an attachment interval (attachment pitch) between the illumination unit 400 and the device side wall hooking member 430 is different, the adjustment member 414 adjusts the difference of the attachment interval. The adjustment member 414 has a plate shape with suitable length, wherein a plurality of attachment holes 415 (415a, 415b, 415c, 415d) having the same dimension as that of the attachment holes 405 formed in the arm 402 of the illumination unit 400, are formed with an interval dimension of suitable length.

For example, when the attachment interval of the device side wall hooking members 430 coincides with the interval of the attachment holes 415a, as shown in FIG. 50, the illumination unit 400 is attached by using the attachment hole 415c, and the adjustment member 414, with the illumination unit 400 attached thereto, is attached to the device side wall hooking member 430 by using the attachment hole 415a. Even when the illumination unit 400 cannot be directly attached to the device side wall hooking member 430, the illumination unit 400 can be indirectly attached to the device side wall hooking member 430. Thus, owing to different rating or dimension of the illumination unit 400, the illumination unit 400 can be attached by using a common wall hooking member (the device side wall hooking member 430 and the wall side wall hooking member 440) even when the attachment interval between the illumination unit 400 and the device side wall hooking member 430 is different.

Similarly, even when the attachment dimension of the wall hooking member is different for every display device due to the difference in size of the display device, the illumination unit 400 can be attached by using the adjustment member 414.

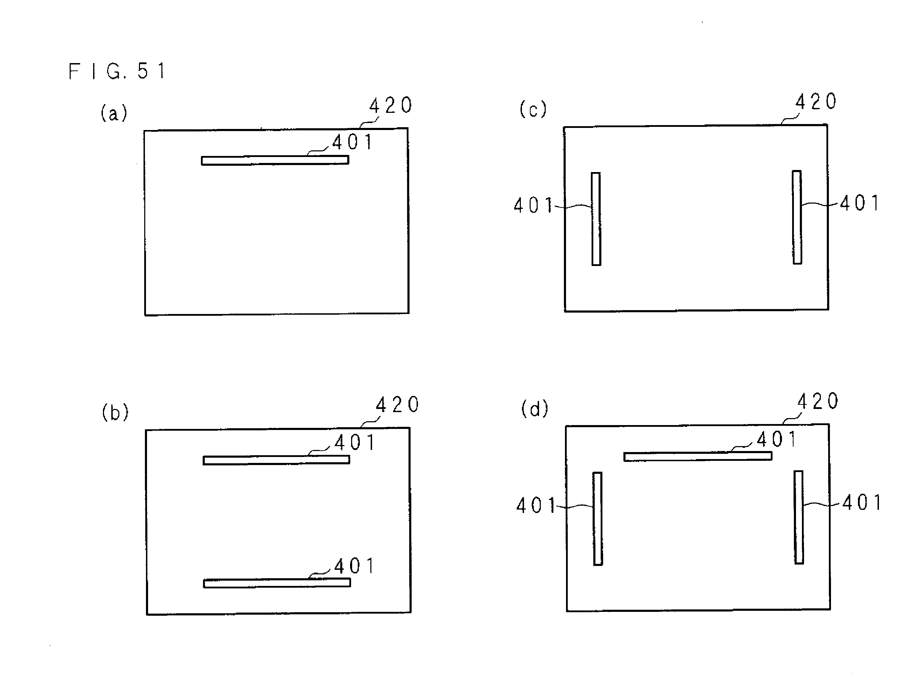

FIG. 51 is a schematic view showing an example of disposing the light source of the illumination unit 400. An example of FIG. 51(a) shows a state of disposing the frame 401 (illumination part) only in the vicinity of the upper side edge portion at the backside of the display device 420. In this case, one illumination unit 400 is used. Also, an example of FIG. 51(b) shows a state of disposing the frame 401 in the vicinity of the upper side edge portion and the lower side edge portion at the backside of the display device 420. In this case, two illumination units 400 are used. Also, an example of FIG. 51(c) shows a state of disposing the frame 401 in the vicinity of the right side edge portion and the left side edge portion at the backside of the display device 420. In this case, two illumination units 400 are used. Further, an example of FIG. 51(d) shows a state of disposing the frame 401 in the vicinity of the upper side edge portion and in the vicinity of the right side edge portion and in the vicinity of the left side edge portion at the backside of the display device 420. In this case, three illumination units 400 are used.

As described above, by disposing the illumination unit 400 in the vicinity of any one of the upper side edge portion, lower side edge portion, left side edge portion, and right side edge portion, or in combination of them or all of them at the backside of the display device 420, the way of looking at the wall surface at the backside of the display device 420 can be changed when the viewer views the picture displayed in the screen of the display device 420, according to a wall hooking position of the display device 420, thus making it possible to realize a viewer's favorite illumination environment.

In the example shown in FIG. 48, when the illumination unit 400 is attached to the device side wall hooking member 430, the arm 402 is disposed so as to be sandwiched between the display device 420 and the device side wall hooking member 430. However, the present invention is not limited thereto.

FIG. 52 is a side view showing other example of the attachment structure of the illumination unit 400. As shown in FIG. 52(a), when the arm 402 of the illumination unit 400 is attached to the device side wall hooking member 450, the arm 402 can be disposed so as to be sandwiched between the device side wall hooking member 450 and the wall side wall hooking member 460. Thus, the light source of the illumination unit 400 can be further separated from the rear surface of the display device 420, thus further improving the heat radiation efficiency. Note that the arm 402 may be disposed between the wall side wall hooking member 460 and the wall. In this case, the shape of the arm 402 is suitably changed so that the direction of the light source illuminates a predetermined range of the wall.

Further, as shown in FIG. 52(b), when the arm 402 of the illumination unit 400 is attached to the device side wall hooking member 451, the arm 402 can be disposed in contact with only the device side wall hooking member 451. Thus, when the illumination unit 400 is attached after the display device 420 is mounted on the wall, the illumination unit 400 can be attached in a state of mounting the display device 420 on the wall, without detaching the device side wall hooking member 451 from the wall side wall hooking member 461. In this case, as a matter of course, a method of attaching the illumination unit 400 to the device side wall hooking member 451 is easy by accessing the space between the display device 420 and the wall.

Further, in the example of FIG. 48, a spacer may be provided between the arm 402 and the display device 420. Thus, the light source can be further separated from the rear surface of the display device 420, and the thermal interference between the illumination unit 400 and the display device 420 can be further prevented.

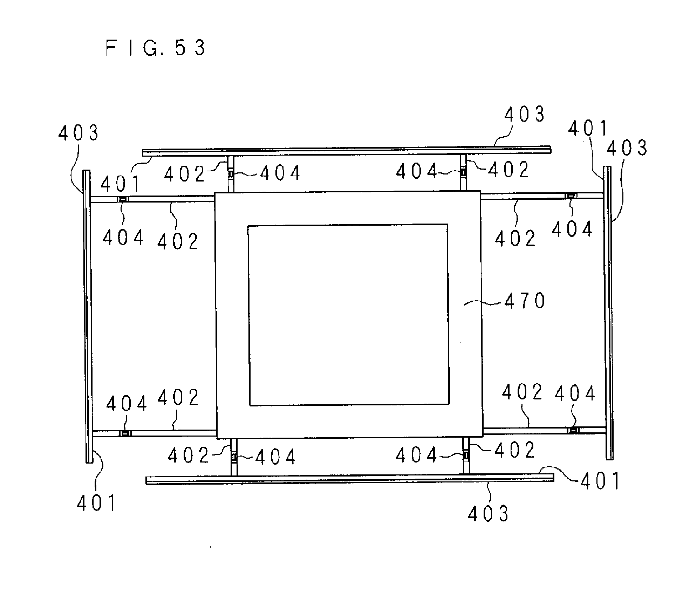

FIG. 53 is a front view showing the structure of the device side wall hooking member 470 including the illumination unit 400. In the example of FIG. 53, the illumination unit 400 and the device side wall hooking member 470 are integrally formed. As shown in FIG. 53, the device side wall hooking member 470 is a frame with a rectangular shape, with the arm 402 of the illumination unit 400 fixed to four corners. Note that the number of the illumination units 400 is not limited to four. Further, the reference numerals are assigned to the same parts as those of the aforementioned example, and the description thereof is omitted. Thus, the illumination unit can also be attached when the display device 420 is mounted on the wall by using the wall hooking member, thus making it possible to eliminate the double stick tape for directly attaching the illumination unit to the display device, and the generation of the dirt or scratch, etc, of the display device body can be prevented, and also an adverse influence by heat generation from both the illumination unit and the display device can be prevented.

According to the ninth embodiment, the illumination unit includes a frame, being the illumination part in which the light source is housed, a support part for supporting the frame (illumination part), and an attachment part for attaching the support part to a suitable mount member. The wall hooking member can be used as the mount member, which is used for mounting the display device, being an example of the illumination target, to the wall. When the display device is mounted on the wall through the wall hooking member (mount member), the attachment part is attached to the wall hooking member. The attachment part may be, for example, a screw hole or may be a screw provided to the support part. Thus, when the display device is mounted on the wall by using the wall hooking member, the illumination unit can be fixed to the wall hooking member, thus eliminating the double stick tape, etc, for directly attaching the illumination unit to the display device, and therefore the dirt or scratch of the display device body can be prevented and also the adverse influence by the heat generation from both the illumination unit and the display device can be prevented.

According to the ninth embodiment, the support part is formed into a rod-shape, with the illumination part supported to one end side, and the attachment part provided to the other end side, and the attachment part is attached to the wall hooking member (mount member) on which the display device, being the illumination target, is mounted. No new member is needed for attaching the illumination unit, and therefore when the display device is mounted on the wall, or even in a state in which the display device is already mounted on the wall, the illumination unit can be easily attached.

According to the ninth embodiment, the illumination part is separated from the illumination target (such as the rear surface of the display device), in a state that the support part is attached to the wall hooking member (mount member). Thus, the light source of the illumination unit is not brought into contact with the rear surface of the display device, and therefore the thermal interference between the display device and the illumination unit can be prevented, thus improving the heat radiation efficiency.

According to the ninth embodiment, a middle part of the support part is curved. Thus, the illumination part can be separated from the illumination target (such as the rear surface of the display device), in a state of attaching the support part to the wall hooking member (mount member).

According to the ninth embodiment, the illumination unit includes the adjustment member in the middle part of the support part for setting the direction of the light source. The setting member is, for example, a hinge, and by bending the hinge of the support member, the direction of the light source can be set. Note that the setting member is not limited to the hinge, and for example, a member for making the illumination part movable with an end portion of the support part as a fulcrum, can also be used. Thus, even when the periphery of the wall hooking type display device is illuminated, a desired range of the wall at the backside of the display device can be brightened, irrespective of the dimension of the display device and the attachment space of the display device from the wall.

According to the ninth embodiment, the illumination unit illuminates the wall of the periphery of the display device (illumination target), in a state of attaching the support part to the wall hooking member (mount member). Thus, the indirect illumination environment for the wall hooking type display device can be provided to the viewer.

According to the ninth embodiment, the illumination unit has a plurality of support parts fixed to the illumination part separately from each other by suitable length, and includes the adjustment member for adjusting the attachment interval between the attachment parts of each support part. Thus, owing to different rating or dimension of the illumination unit, the illumination unit can be attached by using the common wall hooking member, even when the attachment interval of the support parts is different.

According to the ninth embodiment, the attachment part corresponds to an attachment hole formed in the support part, and the adjust member corresponds to a plate provided with a plurality of holes with approximately the same dimension as the dimension of the attachment holes separately by suitable length. The support part is fixed to the adjustment member by fitting the attachment hole of the support part into the adjustment member. Thus, owing to different rating or dimension of the illumination unit, the illumination unit can be attached by using the common wall hooking member, even when the attachment interval of the support parts is different.

According to the ninth embodiment, the illumination unit includes the frame, being the illumination part with the light source housed therein; the support part for supporting the illumination part (frame) and the wall hooking member attached to the support part for mounting the illumination target (for example, the equipment such as the display device) on the wall. Thus, the illumination unit and the wall hooking member can be formed integrally, and the illumination unit can be attached when the display device is mounted on the wall by using the wall hooking member; the double stick tape, etc, is eliminated for directly attaching the illumination unit to the display device; generation of dirt or scratch of the display device body can be prevented; and the adverse influence by the heat generation from both the illumination unit and display device can be prevented.

According to the ninth embodiment, a plurality of illumination units are attached, and a light quantity setting means is provided for setting the light quantity of the light source of each illumination unit according to the attachment position of each illumination unit. For example, when four identical illumination units are attached in the vicinity of four sides of the display device, the light quantity is set so that the light quantity of the light source of the illumination unit disposed in the vicinity of the upper side edge portion and the lower side edge portion of the display device is greater than the light quantity of the light source of the illumination unit disposed in the vicinity of the right and left edge portions. Thus, even when the brightness of the periphery of the display device is changed in the upper/lower and right/left peripheries of the display device, there is no necessity for attaching the illumination unit with different light quantity or size, and the common illumination unit can be used.

As described above, according to the ninth embodiment, the illumination unit can be fixed to the wall hooking member when the display device is mounted on the wall by using the wall hooking member, thus eliminating the double stick tape, etc, for directly attaching the illumination unit to the display device, and the generation of dirt or scratch of the display device body can be prevented, and also the adverse influence by the heat generation from both the illumination unit and the display device can be prevented. Further, the illumination unit can be attached, by using a conventionally used wall hooking member as it is, and therefore, the illumination unit can be attached to any kind of display device, provided that it is the wall hooking type display device.

According to the ninth embodiment, the arm is curved in the middle part. However, the present invention is not limited thereto, and a linear arm without curve may also be used. In this case, for example by disposing a substrate surface housed in the frame so as to be inclined to a bottom part of the frame, or disposing the diffusion plate so as to be inclined, similar effects as the effects obtained by curving the arm can be obtained by inclination of the direction of the light from the LED module with respect to the direction of the arm.

According to the ninth embodiment, two arms are fixed to the frame in the illumination unit. However, the present invention is not limited thereto, and one arm may be fixed to the center of the frame. Further, the frame is not limited to a linear shape, and may be a curved shape. In addition, one illumination unit can be formed by connecting tip end parts of the arms of a plurality of illumination units.

According to the ninth embodiment, the wall side wall hooking member includes two members such as a lateral member and a vertical member each, assembled in a well-curb shape. However, the present invention is not limited thereto. For example, the wall side wall hooking member can be formed by one wide plate-shaped lateral member and two vertical members.

The ninth embodiment shows an example of disposing the illumination unit and the light source, and the present invention is not limited thereto, and any structure may be acceptable provided that the light source of the illumination unit is separated from the rear surface of the display device, and can be disposed outside the wall hooking member.

According to the ninth embodiment, the adjustment member provided with a plurality of attachment holes is used for adjusting the attachment interval of the arms of the illumination units. However, the present invention is not limited thereto, and for example, a rail-like member is provided on the bottom surface of the frame, so that the tip end part of the arm can slide over the rail-like member, and a lock mechanism for fixture at a predetermined position may also be provided.

## Claims

1. An illumination device for illuminating a periphery of equipment such as an image display device, comprising:
a plurality of illumination parts on which a light source is mounted; and
a support part for supporting the plurality of illumination parts, so that a different area of the periphery of the equipment is irradiated with light of the plurality of illumination parts.

2. An illumination device for illuminating periphery of equipment such as an image display device, comprising:
a plurality of illumination parts on which a light source is mounted; and
a support part for supporting the plurality of illumination parts, so that the periphery of the equipment is irradiated with light of the plurality of illumination parts from different directions respectively.

3. The illumination device according to claim 1 or 2, wherein the illumination parts are connected to the support part via a turning member, so as to be turned with respect to the support part.

4. The illumination device according to any one of claims 1 to 3, wherein the turning member includes a locking mechanism for locking the illumination parts at a desired angle with respect to the support part.

5. The illumination device according to any one of claims 1 to 4, wherein a triangular shape is formed by the plurality of illumination parts and the support part.

6. The illumination device according to any one of claims 1 to 5, wherein the support part has leg portions on which the illumination device is installed.

7. The illumination device according to any one of claims 1 to 6, wherein the leg portions can be detached from the support part.

8. The illumination device according to any one of claims 1 to 7, wherein the support part has an attachment part for attachment to the equipment.

9. An image display device, comprising:
an illumination device according to any one of claims 1 to 8; and
an image display device used together with the illumination device.
